(19) Europäisches Patentamt
European Patent Office
Office européen des brevets

(11) EP 4 678 328 A1

(12) EUROPEAN PATENT APPLICATION
published in accordance with Art. 153(4) EPC

(43) Date of publication:
14.01.2026 Bulletin 2026/03

(21) Application number: 24767080.5

(22) Date of filing: 01.03.2024

(51) International Patent Classification (IPC):
B23K 26/00 (2014.01)    B23K 26/364 (2014.01)
C21D 8/12 (2026.01)    C21D 9/46 (2006.01)
C22C 38/00 (2006.01)    C22C 38/06 (2006.01)
H01F 1/147 (2006.01)    H01F 41/02 (2006.01)

(52) Cooperative Patent Classification (CPC):
B23K 26/00; B23K 26/364; C21D 8/12; C21D 9/46;
C22C 38/00; C22C 38/06; H01F 1/147; H01F 41/02

(86) International application number:
PCT/JP2024/007872

(87) International publication number:
WO 2024/185712 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 08.03.2023 JP 2023036047

(71) Applicant: NIPPON STEEL CORPORATION
Chiyoda-ku
Tokyo 100-8071 (JP)

(72) Inventors:
• HAMAMURA, Hideyuki
Tokyo 100-8071 (JP)
• SUGIYAMA, Kimihiko
Tokyo 100-8071 (JP)

(74) Representative: Vossius & Partner
Patentanwälte Rechtsanwälte mbB
Siebertstrasse 3
81675 München (DE)

(54) **GROOVE-DEPTH MONITORING SYSTEM, ELECTRICAL STEEL SHEET MANUFACTURING APPARATUS, GROOVE DEPTH MONITORING METHOD, AND GROOVE DEPTH MONITORING PROGRAM**

(57) A groove depth monitoring system includes: a torque acquisition unit that acquires a rotational torque generated when removing deposits adhering to a front surface of a steel sheet on which a groove is formed by a beam by a polishing brush roll; and a groove depth determination unit that determines whether or not a depth of the groove formed on the front surface of the steel sheet is equal to or larger than a reference value based on the rotational torque acquired by the torque acquisition unit and a predetermined reference rotational torque.

FIG.7

EP 4 678 328 A1

**Description**

Technical Field

The technology disclosed in the present application relates to a groove depth monitoring system, an electrical steel sheet manufacturing apparatus, a groove depth monitoring method, and a groove depth monitoring program.

Background Art

There is a method of manufacturing a grain-oriented electrical steel sheet in which a groove is formed by irradiating a front surface of the grain-oriented electrical steel sheet with a laser beam to refine magnetic domains of the grain-oriented electrical steel sheet and reduce an iron loss (see, for example, Japanese Patent Application Laid-Open (JP-A) No. 2017-122264).

In addition, there is a laser grooving monitoring method of monitoring a form of a groove formed on a front surface of a grain-oriented electrical steel sheet by a laser beam (see, for example, JP-A No. 2019-512047).

In the laser grooving monitoring method disclosed in JP-A No. 2019-512047, spatters generated when forming the groove by irradiating the front surface of the grain-oriented electrical steel sheet with the laser beam are monitored, and the form of the groove formed on the front surface of the grain-oriented electrical steel sheet is determined based on the spatters.

SUMMARY OF INVENTION

Technical Problem

When forming a groove by irradiating a front surface of a rolled steel sheet, which is a material of an electrical steel sheet, with a beam such as a laser beam or an electron beam, in a case where a beam output decreases or a focus (focal point) of the beam on the surface shifts, the groove becomes shallow, which may reduce an iron loss reduction rate of the electrical steel sheet.

However, there is a case where it is not possible to detect a decrease in the beam output for the front surface of the rolled steel sheet or the shift of the focus of the beam only by monitoring the amount of spatters generated when forming the groove by irradiating the front surface of the rolled steel sheet with the beam, and there is a possibility that a depth of the groove formed on the front surface of the electrical steel sheet decreases.

In consideration of the above fact, an object of the technology disclosed in the present application is to suppress a decrease in depth of a groove formed on a front surface of an electrical steel sheet.

Solution to Problem

A groove depth monitoring system according to a first aspect includes:

a torque acquisition unit that acquires a rotational torque generated when removing deposits adhering to a front surface of a steel sheet on which a groove is formed by a beam, by a polishing brush roll; and
a groove depth determination unit that determines whether or not a depth of the groove formed on the front surface of the steel sheet is equal to or larger than a reference value based on the rotational torque acquired by the torque acquisition unit and a predetermined reference rotational torque.

According to the above aspect, the torque acquisition unit acquires the rotational torque generated when removing the deposits adhering to the front surface of the steel sheet on which the groove is formed by the beam by the polishing brush roll. The groove depth determination unit determines whether or not the depth of the groove formed on the front surface of the steel sheet is equal to or larger than the reference value based on the rotational torque acquired by the torque acquisition unit and the predetermined reference rotational torque.

Here, for example, it is possible to detect the steel sheet in which the depth of the groove is smaller than the reference value due to a decrease in output of the beam by monitoring the rotational torque acquired by the torque acquisition unit. Therefore, a decrease in depth of the groove formed on the front surface of the steel sheet can be suppressed.

According to a second aspect, the groove depth monitoring system according to the first aspect further includes

a spatter amount acquisition unit that acquires an amount of spatters generated when forming the groove by irradiating the front surface of the steel sheet with the beam,

in which the groove depth determination unit determines whether or not the depth of the groove formed on the front surface of the steel sheet is equal to or larger than the reference value based on the amount of spatters acquired by the spatter amount acquisition unit, a predetermined reference amount of spatters, the rotational torque acquired by the torque acquisition unit, and the reference rotational torque.

According to the above aspect, the spatter amount acquisition unit acquires the amount of spatters generated when forming the groove by irradiating the front surface of the steel sheet with the beam. Then, the groove depth determination unit determines whether or not the depth of the groove formed on the front surface of the steel sheet is equal to or larger than the reference value based on the amount of spatters acquired by the spatter amount acquisition unit, the predetermined reference amount of spatters, the rotational torque acquired by the torque acquisition unit, and the reference rotational torque.

As a result, for example, it is possible to detect a steel sheet in which the depth of the groove is smaller than the reference value due to a decrease in output of the beam, a focus shift of the beam with respect to the front surface of the steel sheet, or the like. Therefore, a decrease in depth of the groove formed on the front surface of the steel sheet can be suppressed.

Here, the amount of spatters generated when forming the groove by irradiating the front surface of the steel sheet with the beam basically decreases as the depth of the groove formed on the surface decreases. Therefore, the depth of the groove formed on the front surface of the steel sheet can be estimated by monitoring the amount of spatters acquired by the spatter amount acquisition unit.

However, in a case where a focus shift amount of the beam with respect to the front surface of the steel sheet is small, the amount of spatters once decreases and then increases again as the focus shift amount of the beam increases. Therefore, in some cases, the focus shift of the beam cannot be detected in a case where the focus shift amount of the beam with respect to the front surface of the steel sheet is small only by monitoring the amount of spatters acquired by the spatter amount acquisition unit.

Here, in a case where the focus shift amount of the beam with respect to the front surface of the steel sheet is small, the viscosity of the generated spatters increases due to a temperature change or the like of the front surface of the steel sheet, and a particle size of the deposits such as the spatters adhering to the front surface of the steel sheet increases. As a result, the rotational torque generated when removing the deposits adhering to the front surface of the steel sheet by the polishing brush roll also increases.

Therefore, the groove depth determination unit monitors the rotational torque acquired by the torque acquisition unit in addition to the amount of spatters acquired by the spatter amount acquisition unit. As a result, it is possible to detect the focus shift of the beam even in a case where the shift amount of the focus of the beam with respect to the front surface of the steel sheet is small. Therefore, a decrease in depth of the groove formed on the front surface of the steel sheet can be further suppressed.

According to a third aspect, in the groove depth monitoring system according to the second aspect,
the groove depth determination unit determines that the depth of the groove formed on the front surface of the steel sheet is equal to or larger than the reference value in a case in which the amount of spatters acquired by the spatter amount acquisition unit is equal to or more than the reference amount of spatters and the rotational torque acquired by the torque acquisition unit is equal to or less than the reference rotational torque.

According to the above aspect, the groove depth determination unit determines that the depth of the groove formed on the front surface of the steel sheet is equal to or larger than the reference value in a case where the amount of spatters acquired by the spatter amount acquisition unit is equal to or more than the reference amount of spatters and the rotational torque acquired by the torque acquisition unit is equal to or less than the reference rotational torque. As a result, it is possible to easily determine whether or not the depth of the groove formed on the front surface of the steel sheet is equal to or larger than the reference value.

According to a fourth aspect, in the groove depth monitoring system according to the second or third aspect,

the reference amount of spatters is determined based on an amount of spatters generated when forming the groove whose depth is equal to the reference value on the front surface of the steel sheet, and
the reference rotational torque is determined based on a rotational torque generated when removing the deposits adhering to the front surface of the steel sheet on which the groove whose depth is equal to the reference value is formed by the polishing brush roll.

According to the above aspect, the reference amount of spatters is determined based on the amount of spatters generated when forming the groove whose depth is equal to the reference value on the front surface of the steel sheet. The reference rotational torque is determined based on the rotational torque generated when removing the deposits adhering to the front surface of the steel sheet on which the groove whose depth is equal to the reference value is formed by the polishing brush roll.

Then, the groove depth determination unit determines whether or not the depth of the groove formed on the front surface of the steel sheet is equal to or larger than the reference value based on the amount of spatters acquired by the spatter amount acquisition unit, the predetermined reference amount of spatters, the rotational torque acquired by the torque acquisition unit, and the reference rotational torque. As a result, determination accuracy of the groove depth determination unit is improved. Therefore, a decrease in depth of the groove formed on the front surface of the steel sheet can be further suppressed.

According to a fifth aspect, in the groove depth monitoring system according to the fourth aspect,

the reference amount of spatters is determined based on an amount of spatters generated when forming the groove on the front surface of the steel sheet by the beam in a case in which the focus shift amount of the beam with which the front surface of the steel sheet is irradiated is 0 and power of the beam is equal to a reference value,
the reference rotational torque is determined based on a rotational torque generated when removing the deposits adhering to the front surface of the steel sheet on which the groove is formed by the beam by the polishing brush roll in a case in which the focus shift amount of the beam with which the front surface of the steel sheet is irradiated is 0 and the power of the beam is equal to the reference value, and
the groove depth determination unit determines that the depth of the groove formed on the front surface of the steel sheet is equal to or larger than the reference value in a case in which Formula (1) is satisfied.

$$1 \geq S/S0 \geq C1 \text{ and } C2 \leq T/T0 \leq C3 \cdots (1)$$

Here,

S: the amount of spatters acquired by the spatter amount acquisition unit,
S0: the reference amount of spatters,
C1: S1/S0,
S1: the minimum amount of spatters generated when forming the groove whose depth is equal to the reference value on the front surface of the steel sheet,
T: the rotational torque acquired by the torque acquisition unit,
T0: the reference rotational torque,
C2: T1/T0,
T1: the minimum rotational torque generated when removing the deposits adhering to the front surface of the steel sheet on which the groove whose depth is equal to the reference value is formed by the polishing brush roll,
C3: T2/T0, and
T2: the maximum rotational torque generated when removing the deposits adhering to the front surface of the steel sheet on which the groove whose depth is equal to the reference value is formed by the polishing brush roll.

According to the above aspect, in a case where Formula (1) is satisfied, the groove depth determination unit determines that the depth of the groove formed on the front surface of the steel sheet is equal to or larger than the reference value. As a result, it is possible to easily determine whether or not the depth of the groove formed on the front surface of the steel sheet is equal to or larger than the reference value.

According to a sixth aspect, in the groove depth monitoring system according to the fifth aspect,

C1 is 0.83,
C2 is 0.89, and
C3 is 1.11.

According to the above aspect, it is possible to easily determine whether or not the depth of the groove formed on the front surface of the steel sheet is equal to or larger than the reference value.

According to a seventh aspect, in the groove depth monitoring system according to the fourth aspect,

the reference amount of spatters is determined based on an amount of spatters generated when forming the groove on the front surface of the steel sheet by the beam in a case in which the focus shift amount of the beam with which the front surface of the steel sheet is irradiated is 0 and the power of the beam is equal to a reference value,
the reference rotational torque is determined based on a rotational torque generated when removing the deposits adhering to the front surface of the steel sheet on which the groove is formed by the beam by the polishing brush roll in a case in which the focus shift amount of the beam with which the front surface of the steel sheet is irradiated is 0 or the power of the beam is equal to the reference value, and

the groove depth determination unit determines that the depth of the groove formed on the front surface of the steel sheet is equal to or larger than the reference value in a case in which Formula (2) is satisfied.

$$1 \geq S/S0 \geq C1 \text{ and } T1 \leq T \leq T2 \cdots (2)$$

Here,

S: the amount of spatters acquired by the spatter amount acquisition unit,
S0: the reference amount of spatters,
C1: S1/S0,
S1: a minimum amount of spatters generated when forming the groove whose depth is equal to the reference value on the front surface of the steel sheet,
T: the rotational torque acquired by the torque acquisition unit,
T1: the reference rotational torque that is the minimum rotational torque generated when removing the deposits adhering to the front surface of the steel sheet on which the groove whose depth is equal to the reference value is formed by the polishing brush roll, and
T2: the reference rotational torque that is the maximum rotational torque generated when removing the deposits adhering to the front surface of the steel sheet on which the groove whose depth is equal to the reference value is formed by the polishing brush roll.

According to the above aspect, in a case where Formula (2) is satisfied, the groove depth determination unit determines that the depth of the groove formed on the front surface of the steel sheet is equal to or larger than the reference value. As a result, it is possible to easily determine whether or not the depth of the groove formed on the front surface of the steel sheet is equal to or larger than the reference value.

According to an eighth aspect, in the groove depth monitoring system according to the seventh aspect,

C1 is 0.83,
T1 is 800 [Nm], and
T2 is 1000 [Nm].

According to the above aspect, it is possible to easily determine whether or not the depth of the groove formed on the front surface of the steel sheet is equal to or larger than the reference value.

According to a ninth aspect, in the groove depth monitoring system according to the first aspect, the reference rotational torque is determined based on a rotational torque generated when removing the deposits adhering to the front surface of the steel sheet on which the groove whose depth is equal to the reference value is formed by the beam by the polishing brush roll in a case in which a focus shift amount of the beam with which the front surface of the steel sheet is irradiated is 0.

According to the above aspect, the reference rotational torque is determined based on a rotational torque generated when removing the deposits adhering to the front surface of the steel sheet on which the groove whose depth is equal to the reference value is formed by the beam by the polishing brush roll in a case in which a focus shift amount of the beam with which the front surface of the steel sheet is irradiated is 0.

Then, the groove depth determination unit determines whether or not the depth of the groove formed on the front surface of the steel sheet is equal to or larger than the reference value based on the rotational torque acquired by the torque acquisition unit and the predetermined reference rotational torque. Therefore, a decrease in depth of the groove formed on the front surface of the steel sheet can be suppressed.

According to a tenth aspect, in the groove depth monitoring system according to the ninth aspect,

the reference rotational torque is determined based on the rotational torque generated when removing the deposits adhering to the front surface of the steel sheet on which the groove whose depth is equal to the reference value is formed by the beam by the polishing brush roll in a case in which the focus shift amount of the beam with which the front surface of the steel sheet is irradiated is 0 and power of the beam is equal to a reference value,
and the groove depth determination unit determines that the depth of the groove formed on the front surface of the steel sheet is equal to or larger than the reference value in a case in which Formula (3) is satisfied.

$$T1 \leq T \leq T0 \cdots (3)$$

Here,

T: the rotational torque acquired by the torque acquisition unit,

T0: the reference rotational torque, and

T1: a minimum rotational torque generated when removing the deposits adhering to the front surface of the steel sheet on which the groove whose depth is equal to the reference value is formed, by the polishing brush roll.

According to an eleventh aspect, in the groove depth monitoring system according to the tenth aspect,

T0 is 900 [Nm], and

T1 is 800 [Nm].

According to the above aspect, in a case where Formula (3) is satisfied, the groove depth determination unit determines that the depth of the groove formed on the front surface of the steel sheet is equal to or larger than the reference value. As a result, it is possible to easily determine whether or not the depth of the groove formed on the front surface of the steel sheet is equal to or larger than the reference value.

A steel sheet manufacturing apparatus according to a twelfth aspect includes:

a beam irradiation apparatus that irradiates a front surface of a steel sheet that is a material of an electrical steel sheet with a beam to form a groove;

a polishing brush roll that removes deposits adhering to the front surface of the steel sheet on which the groove is formed; and

the groove depth monitoring system for an electrical steel sheet according to any one of the first to eleventh aspects.

According to the above aspect, it is possible to manufacture a steel sheet having a front surface on which a groove whose depth is equal to or larger than a reference value is formed.

A groove depth monitoring method according to a thirteenth aspect includes:

a torque acquisition step of acquiring a rotational torque generated when removing deposits adhering to a front surface of a steel sheet on which a groove is formed by a beam, by a polishing brush roll; and

a groove depth determination step of determining whether or not a depth of the groove formed on the front surface of the steel sheet is equal to or larger than a reference value based on the rotational torque acquired in the torque acquisition step and a predetermined reference rotational torque.

According to the above aspect, in the torque acquisition step, the rotational torque generated when removing the deposits adhering to the front surface of the steel sheet on which the groove is formed by the beam by the polishing brush roll is acquired. In the groove depth determination step, it is determined whether or not the depth of the groove formed on the front surface of the steel sheet is equal to or larger than the reference value based on the rotational torque acquired in the torque acquisition step and the predetermined reference rotational torque.

Here, for example, it is possible to detect the steel sheet in which the depth of the groove is smaller than the reference value due to a decrease in output of the beam by monitoring the rotational torque acquired in the torque acquisition step. Therefore, a decrease in depth of the groove formed on the front surface of the steel sheet can be suppressed.

A groove depth monitoring program according to a fourteenth aspect that is executable by a computer to perform processing including:

a torque acquisition step of acquiring a rotational torque generated when removing deposits adhering to a front surface of a steel sheet on which a groove is formed by a beam by a polishing brush roll; and

a groove depth determination step of determining whether or not a depth of the groove formed on the front surface of the steel sheet is equal to or larger than a reference value based on the rotational torque acquired in the torque acquisition step and a predetermined reference rotational torque.

According to the above aspect, actions and effects similar to those of the groove depth monitoring method according to the thirteenth aspect can be obtained.

Advantageous Effects of Invention

According to the technology disclosed in the present application, it is possible to suppress a decrease in depth of the groove formed on the front surface of the electrical steel sheet.

BRIEF DESCRIPTION OF DRAWINGS

Fig. 1 is a side view of a grain-oriented electrical steel sheet manufacturing apparatus according to one embodiment when viewed from a width direction of a cold-rolled steel sheet.

Fig. 2 is a side view of the grain-oriented electrical steel sheet manufacturing apparatus according to one embodiment when viewed from the width direction of the cold-rolled steel sheet.

Fig. 3 is a flowchart illustrating an example of a grain-oriented electrical steel sheet manufacturing method according to one embodiment.

Fig. 4 is a perspective view of a groove depth monitoring system included in the grain-oriented electrical steel sheet manufacturing apparatus according to one embodiment when viewed from a front side in a conveyance direction of the cold-rolled steel sheet.

Fig. 5 is a hardware configuration diagram of a control apparatus of the groove depth monitoring system according to one embodiment.

Fig. 6 is a functional block diagram of the control apparatus of the groove depth monitoring system according to one embodiment.

Fig. 7 is a flowchart illustrating an example of groove depth monitoring processing according to one embodiment.

Fig. 8 is a table illustrating test results of grain-oriented electrical steel sheet manufacturing tests according to one embodiment.

Fig. 9 is a graph illustrating a relationship between a depth of a groove formed on a front surface of the grain-oriented electrical steel sheet and an iron loss reduction rate of the grain-oriented electrical steel sheet in the grain-oriented electrical steel sheet manufacturing test according to one embodiment.

Fig. 10 is a graph illustrating a relationship between a focus shift amount of a laser beam with respect to the front surface of the grain-oriented electrical steel sheet and the depth of the groove formed on the front surface of the grain-oriented electrical steel sheet in the grain-oriented electrical steel sheet manufacturing test according to one embodiment.

Fig. 11 is a graph illustrating a relationship between the focus shift amount of the laser beam with respect to the front surface of the grain-oriented electrical steel sheet and the amount of spatters generated when the groove is formed by irradiating the front surface of the grain-oriented electrical steel sheet with the laser beam in the grain-oriented electrical steel sheet manufacturing test according to one embodiment.

Fig. 12 is a graph illustrating a relationship between the focus shift amount of the laser beam with respect to the front surface of the grain-oriented electrical steel sheet and a rotational torque generated in a polishing brush roll when polishing the front surface of the grain-oriented electrical steel sheet by the polishing brush roll in the grain-oriented electrical steel sheet manufacturing test according to one embodiment.

Fig. 13 is a graph illustrating a relationship between the amount of spatters generated when the groove is formed by irradiating the front surface of the grain-oriented electrical steel sheet with the laser beam and the depth of the groove formed on the front surface of the grain-oriented electrical steel sheet in the grain-oriented electrical steel sheet manufacturing test according to one embodiment.

Fig. 14 is a graph illustrating a relationship between the rotational torque generated in the polishing brush roll when polishing the front surface of the grain-oriented electrical steel sheet by the polishing brush roll and the depth of the groove formed on the front surface of the grain-oriented electrical steel sheet in the grain-oriented electrical steel sheet manufacturing test according to one embodiment.

Fig. 15 is a graph illustrating a relationship between a ratio of the amount of spatters to a reference amount of spatters and the rotational torque generated in the polishing brush roll when polishing the front surface of the grain-oriented electrical steel sheet by the polishing brush roll in the grain-oriented electrical steel sheet manufacturing test according to one embodiment.

Fig. 16 is a graph illustrating a relationship between the ratio of the amount of spatters to the reference amount of spatters and a ratio of a rotational torque $T$ to a reference rotational torque in the grain-oriented electrical steel sheet manufacturing test according to one embodiment.

DESCRIPTION OF EMBODIMENTS

Hereinafter, one embodiment will be described with reference to the drawings. In the drawings, the same or equivalent components are denoted by the same reference signs. In addition, unless otherwise specified, the number of component is not limited to one, and a plurality of components may be present.

(Grain-Oriented Electrical Steel Sheet)

First, a configuration of a grain-oriented electrical steel sheet according to the present embodiment will be described.

The grain-oriented electrical steel sheet is an electrical steel sheet in which magnetization easy axes of crystal grains (<100> orientations of body-centered cubic crystals) are substantially aligned in a rolling direction of the steel sheet (a longitudinal direction or a conveyance direction). Further, the grain-oriented electrical steel sheet has a plurality of magnetic domains in which magnetization directions are aligned in the rolling direction. The grain-oriented electrical steel sheet is an example of an electrical steel sheet.

The grain-oriented electrical steel sheet has a characteristic of having a smaller iron loss than an ordinary steel sheet due to a characteristic magnetic domain configuration thereof. In order to further reduce the iron loss of the grain-oriented electrical steel sheet, a front surface of the grain-oriented electrical steel sheet (or a cold-rolled steel sheet that is a material of the grain-oriented electrical steel sheet) is irradiated with a laser beam to form a plurality of grooves. The plurality of grooves are formed so as to extend in a width direction of the grain-oriented electrical steel sheet (a direction perpendicular to the rolling direction of the grain-oriented electrical steel sheet) or in a direction slightly inclined with respect to the width direction of the grain-oriented electrical steel sheet, and are formed so as to be arranged at regular intervals in the rolling direction of the grain-oriented electrical steel sheet. The grooves refine the magnetic domains of the grain-oriented electrical steel sheet, so that the iron loss of the grain-oriented electrical steel sheet is reduced.

Since the grain-oriented electrical steel sheet has a property of being easily magnetized in the rolling direction of the grain-oriented electrical steel sheet, the grain-oriented electrical steel sheet is used as a material of a wound iron core (iron core material) of a wound transformer in which a direction in which a line of magnetic force flows is substantially constant. The wound iron core is formed, for example, by layering a plurality of grain-oriented electrical steel sheets and bending (winding) the layered grain-oriented electrical steel sheets so as to form a shape of the iron core.

When forming the groove on the front surface of the grain-oriented electrical steel sheet, it is desirable to form the groove so as to extend in the width direction of the grain-oriented electrical steel sheet because efficiency in reducing the iron loss can be improved. However, for example, when an attempt is made to bend the grain-oriented electrical steel sheet in which the groove is formed at a bending line along the width direction of the grain-oriented electrical steel sheet in order to form the wound iron core of the transformer by using the grain-oriented electrical steel sheet, the grain-oriented electrical steel sheet is more likely to be broken starting from the groove. Therefore, the groove is formed so as to extend in a direction slightly inclined with respect to the width direction of the grain-oriented electrical steel sheet. In this case, although the efficiency in reducing the iron loss of the grain-oriented electrical steel sheet is slightly deteriorated, a possibility of breakage when the grain-oriented electrical steel sheet is bent can be reduced. In a case where the groove extending in a direction slightly inclined with respect to the width direction of the grain-oriented electrical steel sheet is formed on the front surface of the grain-oriented electrical steel sheet, an inclination angle of the groove can be set if appropriate. The inclination angle of the groove is preferably, for example, larger than 0° and equal to or smaller than 20° in consideration of the efficiency in reducing the iron loss of the grain-oriented electrical steel sheet and the possibility of breakage.

The grain-oriented electrical steel sheet is made of an iron alloy containing Si. A composition of the grain-oriented electrical steel sheet is, for example, 2.5 mass% or more and 4.0 mass% or less of Si, 0.001 mass% or more and 0.10 mass% or less of C, 0.05 mass% or more and 0.20 mass% or less of Mn, 0.001 mass% or more and 0.040 mass% or less of acid-soluble Al, 0.0002 mass% or more and 0.012 mass% or less of N, S01 mass% or more and 0.030 mass% or less, and 0.01 mass% or more and 0.04 mass% or less of P, with the balance being Fe and unavoidable impurities. The grain-oriented electrical steel sheet has a thickness of, for example, 0.15 mm or more and 0.35 mm or less.

The front surface of the grain-oriented electrical steel sheet is coated with a glass film. The glass film is made of a composite oxide such as forsterite ($Mg_2SiO_4$), spinel ($MgAl_2O_4$), or cordierite ($Mg_2Al_4Si_5O_{18}$). The glass film has a thickness of, for example, 1 $\mu$m.

The glass film is further coated with an insulating film. The insulating film contains, for example, an insulation coating agent (coating liquid) mainly containing colloidal silica and phosphate (magnesium phosphate, aluminum phosphate, or the like), or an insulation coating agent (coating liquid) obtained by mixing an alumina sol and a boric acid.

(Grain-Oriented Electrical Steel Sheet Manufacturing Apparatus)

Next, a configuration of a grain-oriented electrical steel sheet manufacturing apparatus according to the present embodiment will be described.

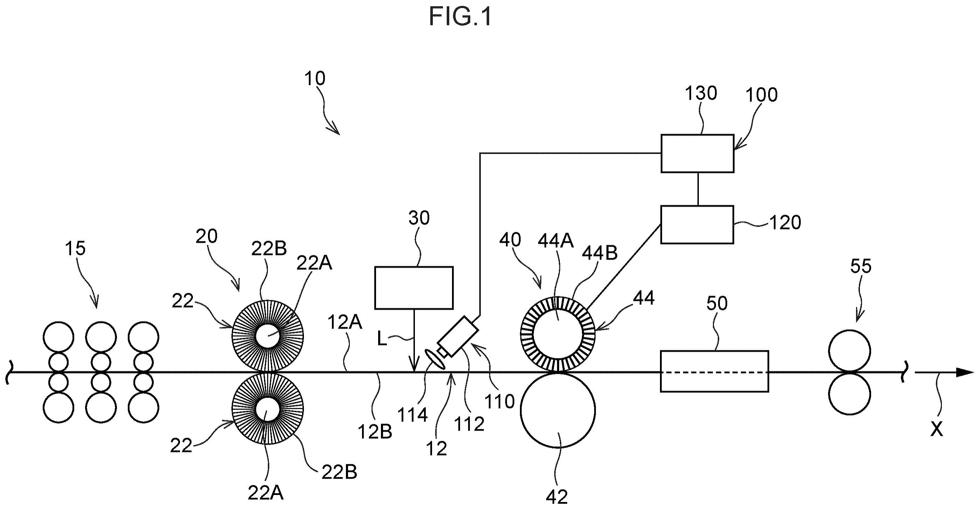

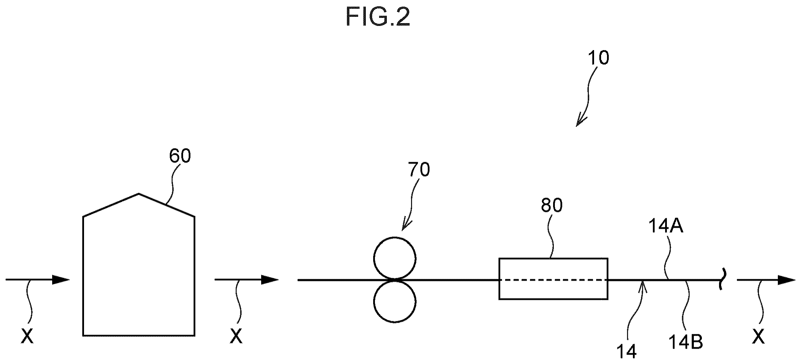

Figs. 1 and 2 are side views of a grain-oriented electrical steel sheet manufacturing apparatus 10 according to the present embodiment when viewed from a width direction of a cold-rolled steel sheet 12. The grain-oriented electrical steel sheet manufacturing apparatus 10 (hereinafter, also referred to as "manufacturing apparatus 10") is an apparatus that manufactures a grain-oriented electrical steel sheet 14 (see Fig. 2). Figs. 1 and 2 are continuous views illustrating a manufacturing line of the manufacturing apparatus 10. A hot-rolled steel sheet that is a material of the grain-oriented electrical steel sheet 14 is processed by each apparatus included in the manufacturing apparatus 10 as illustrated in Fig. 1, and then processed by each apparatuses included in the manufacturing apparatus 10 as illustrated in Fig. 2 to obtain the grain-oriented electrical steel sheet 14 with a reduced iron loss. The cold-rolled steel sheet is an example of a rolled steel sheet and a steel sheet.

As an example, the manufacturing apparatus 10 includes a finish rolling mill 15, an oil film removal apparatus 20, a beam irradiation apparatus 30, a polishing apparatus 40, a decarburization annealing apparatus 50, an annealing separator application apparatus 55, a final finish annealing apparatus 60, an insulation coating agent application apparatus 70, and a flattening annealing apparatus 80. The finish rolling mill 15, the oil film removal apparatus 20, the beam irradiation apparatus 30, the polishing apparatus 40, the decarburization annealing apparatus 50, the annealing separator application apparatus 55, the final finish annealing apparatus 60, the insulation coating agent application apparatus 70, and the flattening annealing apparatus 80 are arranged in this order in the conveyance direction of the grain-oriented electrical steel sheet 14 along the manufacturing line of the grain-oriented electrical steel sheet 14 (see Fig. 2).

(Finish Rolling Mill)

As illustrated in Fig. 1, the finish rolling mill 15 is a rolling mill that produces the cold-rolled steel sheet 12 by rolling (cold rolling) the hot-rolled steel sheet, which is produced by performing rolling with a plurality of known rough rolling mills and is the material of the grain-oriented electrical steel sheet 14 (see Fig. 2), so as to have a desired thickness. A known finish rolling mill can be used as the finish rolling mill 15 according to the present embodiment if appropriate.

An arrow X indicates the conveyance direction and the rolling direction of the cold-rolled steel sheet 12 (grain-oriented electrical steel sheet 14). Hereinafter, a direction indicated by the arrow X is referred to as the conveyance direction X. The conveyance direction X coincides with the longitudinal direction of the cold-rolled steel sheet 12 (grain-oriented electrical steel sheet 14).

(Oil Film Removal Apparatus)

The oil film removal apparatus 20 is an apparatus that removes oil films adhering to a front surface 12A and a back surface 12B of the cold-rolled steel sheet 12 produced by the finish rolling mill 15.

Here, when producing the cold-rolled steel sheet 12 by the finish rolling mill 15, oil (rolling oil) is applied to at least one of the rolling roll and the cold-rolled steel sheet 12 (hot-rolled steel sheet) in order to reduce a friction between a rolling roll of the finish rolling mill 15 and the cold-rolled steel sheet 12 (hot-rolled steel sheet), and then the cold-rolled steel sheet 12 (hot-rolled steel sheet) is rolled. Therefore, the rolling oil adheres as the oil films to the front surface 12A and the back surface 12B of the cold-rolled steel sheet 12 immediately after rolling. The oil film removal apparatus 20 removes the rolling oil (oil films) adhering to the front surface 12A and the back surface 12B of the cold-rolled steel sheet 12 in this manner.

The oil film removal apparatus 20 includes a pair of cleaning brush rolls 22. The pair of cleaning brush rolls 22 is disposed so as to face the front surface 12A and the back surface 12B of the cold-rolled steel sheet 12.

The cleaning brush roll 22 includes a roll 22A and a cleaning brush 22B. The roll 22A is disposed such that a direction of a rotation axis of the roll 22A is parallel to the width direction of the cold-rolled steel sheet 12. Both end sides of the roll 22A in an axial direction are rotatably supported by bearings (not illustrated). The roll 22A, that is, the cleaning brush roll 22, is rotated by a motor (not illustrated) or the like. A rotation direction of the cleaning brush roll 22 is not particularly limited. However, it is preferable that the rotation direction of the cleaning brush roll 22 is opposite to the conveyance direction X of the cold-rolled steel sheet 12 to efficiently clean the front surface 12A and the back surface 12B of the cold-rolled steel sheet 12.

The cleaning brush 22B has a plurality of bristles radially extending from the roll 22A. The cleaning brush 22B is disposed such that tip portions of the plurality of bristles come into contact with the front surface 12A or the back surface 12B of the cold-rolled steel sheet 12, so that the oil film adhering to the front surface 12A or the back surface 12B of the cold-rolled steel sheet 12 can be removed. The bristles of the cleaning brush 22B are formed of nylon or the like softer than a polishing brush 44B described below to prevent damage such as scratches of the front surface 12A or the back surface 12B of the cold-rolled steel sheet 12. A cleaning agent capable of removing the oil film is supplied to the cleaning brush 22B from a cleaning liquid supply nozzle (not illustrated). For example, an alkaline cleaning agent is used as the cleaning agent. The oil film removal apparatus 20 sequentially rubs the front surface 12A or the back surface 12B of the cold-rolled steel sheet 12 with the plurality of bristles of the cleaning brush 22B according to the rotation of the roll 22A. As a result, the oil film removal apparatus 20 can scrape off the oil film spreading on the front surface 12A or the back surface 12B of the cold-rolled steel sheet 12 while using the cleaning agent if appropriate.

A dryer (not illustrated) for drying the cleaning agent or the like adhering to the front surface 12A and the back surface 12B of the cold-rolled steel sheet 12 may be provided at a position immediately downstream of the oil film removal apparatus 20.

(Beam Irradiation Apparatus)

As an example, the beam irradiation apparatus 30 is an apparatus that irradiates the front surface 12A of the cold-rolled steel sheet 12 from which the oil film has been removed by the oil film removal apparatus 20 with a laser beam L to form the groove.

Specifically, the beam irradiation apparatus 30 irradiates the front surface 12A of the cold-rolled steel sheet 12 out of the front surface 12A and the back surface 12B of the cold-rolled steel sheet 12 with the laser beam L. Then, the beam irradiation apparatus 30 scans the front surface 12A of the cold-rolled steel sheet 12 with the laser beam L to form the groove extending in a direction parallel to the width direction of the cold-rolled steel sheet 12 or a direction inclined at a predetermined angle (preferably, an angle larger than 0° and equal to or smaller than 20°) with respect to the width direction of the cold-rolled steel sheet 12 (which are also referred to as scanning directions) on the front surface 12A.

In addition, the beam irradiation apparatus 30 forms the plurality of grooves extending in the scanning direction at a predetermined pitch in the conveyance direction X of the cold-rolled steel sheet 12. The grooves refine the magnetic domains of the grain-oriented electrical steel sheet 14 (see Fig. 2), so that the iron loss of the grain-oriented electrical steel sheet 14 is reduced.

Examples of the type of the laser beam L can include a fiber laser, a YAG laser, and a $CO_2$ laser. A wavelength of the laser beam L can be, for example, 1060 to 1090 nm or 10.6 $\mu$m. Furthermore, the wavelength of the laser beam L can be, for example, 150 nm to 11000 nm (11 $\mu$m). Each groove has a depth of, for example, 20 $\mu$m. The groove has a width of, for example, 50 $\mu$m. An interval (pitch) between the grooves is 3 mm, for example.

The beam irradiation apparatus 30 is not limited to using the laser beam, and may be, for example, an apparatus that irradiates the front surface 12A of the cold-rolled steel sheet 12 with an electron beam to form the groove.

(Polishing Apparatus)

The polishing apparatus 40 is an apparatus that removes, by polishing or grinding, deposits such as molten protrusions or scattered matters adhering to the front surface 12A of the cold-rolled steel sheet 12 due to the spatters, melt, or the like generated when forming the groove on the front surface 12A, after the irradiation with the laser beam L by the beam irradiation apparatus 30 and before decarburization annealing by the decarburization annealing apparatus 50 described below.

The polishing apparatus 40 includes a pair of backup rolls 42 and a polishing brush roll 44. The backup roll 42 is disposed such that a direction of a rotation axis of the backup roll 42 is parallel to the width direction of the cold-rolled steel sheet 12. Both end sides of the backup roll 42 in an axial direction are rotatably supported by bearings (not illustrated). The backup roll 42 is disposed so as to face the back surface 12B on which no groove is formed out of the front surface 12A and the back surface 12B of the cold-rolled steel sheet 12, and supports the back surface 12B.

The polishing brush roll 44 is disposed on a side of the cold-rolled steel sheet 12 (a side adjacent to the front surface 12A on which the groove is formed) that is opposite to the backup roll 42. The polishing brush roll 44 includes a roll 44A and the polishing brush 44B. The roll 44A is disposed such that a direction of a rotation axis of the roll 44A is parallel to the width direction of the cold-rolled steel sheet 12. Both end sides of the roll 44A in the axial direction are rotatably supported by the bearings (not illustrated). The roll 44A, that is, the polishing brush roll 44, is rotated by a motor (not illustrated) or the like. A rotation direction of the polishing brush roll 44 is not particularly limited. However, it is preferable that the rotation direction of the polishing brush roll 44 is opposite to the conveyance direction X of the cold-rolled steel sheet 12 to efficiently polish the front surface 12A of the cold-rolled steel sheet 12.

The polishing brush 44B has a plurality of bristles radially extending from the roll 44A. The plurality of bristles are formed of nylon harder than the cleaning brush 22B, nylon containing abrasive grains, or the like. Tip portions of the plurality of bristles are disposed so as to come into contact with the front surface 12A of the cold-rolled steel sheet 12. The polishing apparatus 40 sequentially rubs the front surface 12A of the cold-rolled steel sheet 12 with the tip portions of the bristles of the polishing brush 44B according to the rotation of the polishing brush roll 44. As a result, the polishing apparatus 40 can scrape off the deposits such as the molten protrusions protruding from the front surface 12A of the cold-rolled steel sheet 12.

In the present embodiment, the directions of the rotation axes of the cleaning brush roll 22 and the polishing brush roll 44 are directions parallel to the width direction of the cold-rolled steel sheet 12 regardless of whether the scanning direction of the laser beam L of the beam irradiation apparatus 30 described above is a direction parallel to the width direction of the cold-rolled steel sheet 12 or a direction inclined by a predetermined angle with respect to the width direction of the cold-rolled steel sheet 12. However, in a case where the scanning direction of the laser beam L is a direction inclined by a predetermined angle with respect to the width direction of the cold-rolled steel sheet 12, and meandering of the cold-rolled steel sheet 12 can be suppressed by adjusting a conveyance speed or the like of the cold-rolled steel sheet 12, the directions of the rotation axes of the cleaning brush roll 22 and the polishing brush roll 44 may be inclined with respect to the width direction of the cold-rolled steel sheet 12 within a range of the predetermined angle from a direction parallel to the width direction of the cold-rolled steel sheet 12.

In addition, a dryer (not illustrated) for drying a polishing agent, moisture, or the like adhering to the front surface 12A and the back surface 12B of the cold-rolled steel sheet 12 may be provided at a position immediately downstream of the polishing apparatus 40.

(Decarburization Annealing Apparatus)

The decarburization annealing apparatus 50 is an apparatus that decarburizes and anneals the cold-rolled steel sheet 12 in which the groove is formed. More specifically, the decarburization annealing apparatus 50 performs decarburization annealing (continuous annealing) on the cold-rolled steel sheet 12 in which the groove is formed at a predetermined temperature (for example, 700°C to 900°C) for a predetermined heating time (for example, 1 to 3 minutes), or the like. As a result, as described below, primary recrystallization (crystal grain size: 10 to 30 $\mu$m) occurs in the cold-rolled steel sheet 12, and oxide layers mainly containing silica ($SiO_2$) are formed on the front surface 12A and the back surface 12B of the cold-rolled steel sheet 12.

Here, when the cold-rolled steel sheet 12 is decarburized and annealed by the decarburization annealing apparatus 50, the cold-rolled steel sheet 12 is decarburized, and primary recrystallization (crystal grain size: 10 to 30 $\mu$m) occurs in the cold-rolled steel sheet 12. When the cold-rolled steel sheet 12 is decarburized and annealed, oxide layers mainly containing silica ($SiO_2$) are formed on the front surface 12A and the back surface 12B of the cold-rolled steel sheet 12.

For example, it is also possible to nitride the cold-rolled steel sheet 12 (for example, 150 to 300 ppm) by heat treatment in an ammonia-containing atmosphere during or after decarburization annealing and before applying an annealing separator onto the front surface 12A and the back surface 12B of the cold-rolled steel sheet 12.

(Annealing Separator Application Apparatus)

The annealing separator application apparatus 55 is an apparatus that applies the annealing separator mainly containing magnesia (MgO) onto the oxide layers formed on the front surface 12A and the back surface 12B of the cold-rolled steel sheet 12 by decarburization annealing. The cold-rolled steel sheet 12 is wound into a coil shape by a winding apparatus (not illustrated) after the annealing separator is applied by the annealing separator application apparatus 55.

(Final Finish Annealing Apparatus)

As illustrated in Fig. 2, the final finish annealing apparatus 60 is an apparatus that anneals the cold-rolled steel sheet 12 decarburized and annealed by the decarburization annealing apparatus 50 to cause secondary recrystallization. More specifically, the final finish annealing apparatus 60 performs heat treatment by inserting the coil-shaped cold-rolled steel sheet 12, which has been decarburized and annealed by the decarburization annealing apparatus 50 and to which the annealing separator has been applied by the annealing separator application apparatus 55, into a batch furnace. Heat treatment conditions are, for example, a heating temperature of 1100°C to 1300°C and a heating time of 20 to 24 hours. By the heat treatment, a so-called Goss grain in which a magnetization easy axis coincides with the conveyance direction X of the cold-rolled steel sheet 12 is preferentially subjected to crystal-growth (secondary recrystallization occurs) in the cold-rolled steel sheet 12. As a result, the grain-oriented electrical steel sheet 14 having a high crystal orientation is obtained. In addition, at the time of performing final finish annealing by the final finish annealing apparatus 60, the oxide layers and the annealing separator react with each other, and glass films made of forsterite ($Mg_2SiO_4$) are formed on the front surface 12A and the back surface 12B of the cold-rolled steel sheet 12 to form the grain-oriented electrical steel sheet 14.

(Insulation Coating Agent Application Apparatus)

The insulation coating agent application apparatus 70 unwinds the grain-oriented electrical steel sheet 14, which is wound into the coil shape and in which the secondary recrystallization has occurred, in a plate shape. In addition, the insulation coating agent application apparatus 70 applies the insulation coating agent (coating liquid) which can provide an electrical insulation property and can apply a predetermined tension to the front surface 14A and the back surface 14B on the glass films on the front surface 14A and the back surface 14B of the unwound grain-oriented electrical steel sheet 14.

(Flattening Annealing Apparatus)

The flattening annealing apparatus 80 performs annealing at a predetermined temperature (for example, 800°C to 850°C) for a predetermined time (for example, 10 seconds or more and 120 seconds or less) while conveying the grain-oriented electrical steel sheet 14 to which the insulation coating agent is applied by a conveyance apparatus, and bakes the insulation coating agent on the front surface 14A and the back surface 14B of the grain-oriented electrical steel sheet 14. As a result, insulating films are formed on the front surface 14A and the back surface 14B of the grain-oriented electrical steel sheet 14. A tension (sheet passing tension) is applied to the grain-oriented electrical steel sheet 14 from the conveyance apparatus in the conveyance direction X of the grain-oriented electrical steel sheet 14. As a result, a coil set and strain occurring in the grain-oriented electrical steel sheet 14 at the time of the final finish annealing are removed, and the grain-oriented electrical steel sheet 14 is flattened. In addition, the electrical insulation property is provided to the grain-oriented electrical steel sheet 14 by the insulating films on the front surface 14A and the back surface 14B of the grain-oriented electrical steel sheet 14.

(Grain-Oriented Electrical Steel Sheet Manufacturing Method)

Next, an example of a grain-oriented electrical steel sheet manufacturing method according to the present embodiment will be described.

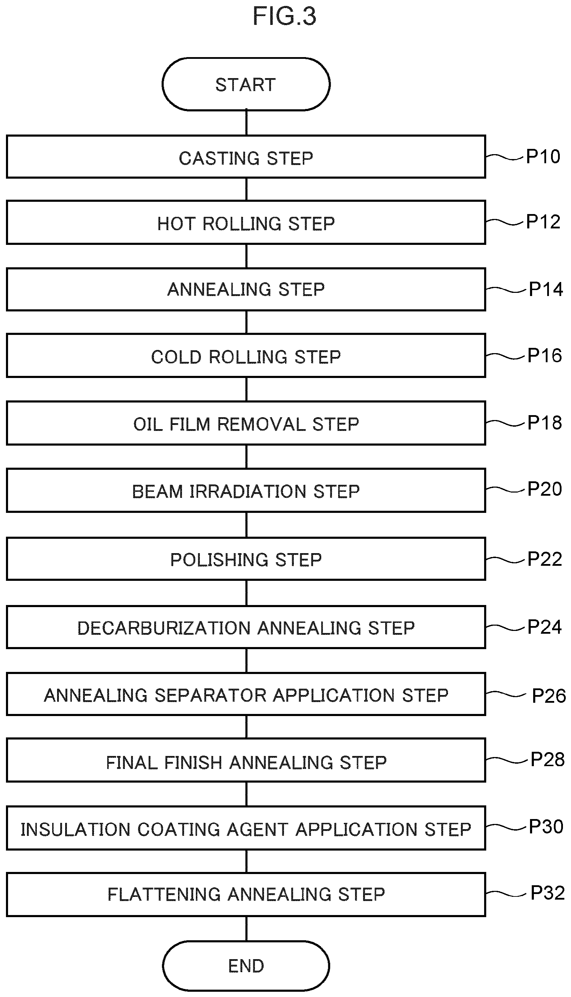

As illustrated in Fig. 3, the grain-oriented electrical steel sheet manufacturing method according to the present embodiment includes, as an example, a casting step, a hot rolling step, an annealing step, a cold rolling step, an oil film removal step, a beam irradiation step, a polishing step, a decarburization annealing step, an annealing separator application step, a final finish annealing step, an insulation coating agent application step, and a flattening annealing step.

(Casting Step to Annealing Step)

First, in the casting step (step P10 and continuous casting step), a slab is formed by a continuous casting machine (not illustrated). Next, in the hot rolling step (step P12), the slab is hot-rolled by a rough rolling mill (not illustrated) or the like to form a steel sheet (hereinafter, referred to as "hot-rolled steel sheet") having a predetermined thickness. Next, in the annealing step (step P14), the hot-rolled steel sheet is annealed at a predetermined temperature.

(Cold Rolling Step)

Next, as illustrated in Fig. 1, in the cold rolling step (step P16), for example, the hot-rolled steel sheet having a front surface and a back surface coated with the rolling oil (cold rolling oil) is rolled by the finish rolling mill 15 and stretched in the conveyance direction X to form the cold-rolled steel sheet 12 having a predetermined thickness.

(Oil Film Removal Step)

Next, in the oil film removal step (step P18), the oil films adhering to the front surface 12A and the back surface 12B on both sides of the cold-rolled steel sheet 12 are removed by the oil film removal apparatus 20.

(Beam Irradiation Step)

Next, in the beam irradiation step (step P20), the front surface 12A of the cold-rolled steel sheet 12, which is conveyed by the conveyance apparatus and from which the oil film has been removed, is irradiated with the laser beam L by the beam irradiation apparatus 30 to form the plurality of grooves (laser grooves).

Specifically, the front surface 12A of the cold-rolled steel sheet 12 conveyed by the conveyance apparatus is irradiated with the laser beam L from the beam irradiation apparatus 30, and the grooves are formed on the front surface 12A in a direction parallel to the width direction of the cold-rolled steel sheet 12 or a direction inclined by a predetermined angle (preferably, an angle larger than 0° and equal to or smaller than 20°) with respect to the width direction of the cold-rolled steel sheet 12.

In addition, the beam irradiation apparatus 30 forms the plurality of grooves at predetermined intervals (pitches) in the conveyance direction X of the cold-rolled steel sheet 12 on the front surface 12A of the cold-rolled steel sheet 12. The grooves refine the magnetic domains of the grain-oriented electrical steel sheet 14, and reduce the iron loss of the grain-oriented electrical steel sheet 14.

(Polishing Step)

Next, in the polishing step (step P22), the deposits such as the molten protrusions and the scattered matters adhering to the front surface 12A of the cold-rolled steel sheet 12 on which the grooves are formed by the laser beam L are removed by the polishing apparatus 40 before the cold-rolled steel sheet 12 is decarburized and annealed by the decarburization annealing apparatus 50.

Specifically, in the polishing apparatus 40, the polishing brush roll 44 is rotated by the motor (not illustrated) while supplying a polishing liquid containing abrasive grains from a polishing liquid supply nozzle (not illustrated) to the front surface 12A of the cold-rolled steel sheet 12. Alternatively, in the polishing apparatus 40, the polishing brush roll 44 having the bristles such as nylon containing abrasive grains is rotated by the motor (not illustrated) while supplying the polishing liquid made of water from the polishing liquid supply nozzle to the front surface 12A of the cold-rolled steel sheet 12. As a result, the deposits adhering to the front surface 12A of the cold-rolled steel sheet 12 are polished and removed by the polishing brush 44B attached to the rotating polishing brush roll 44.

(Decarburization Annealing Step)

Next, in the decarburization annealing step (step P24), the cold-rolled steel sheet 12 on which the grooves are formed is subjected to decarburization annealing (continuous annealing) at a predetermined temperature (for example, 700°C to 900°C) using the decarburization annealing apparatus 50. As a result, the cold-rolled steel sheet 12 is decarburized, and the primary recrystallization (crystal grain size: 10 to 30 $\mu$m) occurs in the cold-rolled steel sheet 12. As the cold-rolled steel sheet 12 is decarburized and annealed, the oxide layers mainly containing silica ($SiO_2$) are formed on the front surface 12A and the back surface 12B of the cold-rolled steel sheet 12.

(Annealing Separator Application Step)

Next, in the annealing separator application step (step P26), the annealing separator mainly containing magnesia (MgO) is applied onto the oxide layers on the front surface 12A and the back surface 12B of the cold-rolled steel sheet 12 formed at the time of decarburization annealing by the annealing separator application apparatus 55. Thereafter, the cold-rolled steel sheet 12 is wound into the coil shape by the winding apparatus (not illustrated).

(Final Finish Annealing Step)

Next, as illustrated in Fig. 2, in the final finish annealing step (step P28), the coil-shaped cold-rolled steel sheet 12 is annealed (batch-annealed) at a predetermined temperature (for example, about 1200°C) for a predetermined time (for example, about 20 hours) by the final finish annealing apparatus 60. The heat treatment conditions are, for example, a heating temperature of 1100°C to 1300°C and a heating time of 20 to 24 hours.

As a result, the secondary recrystallization occurs in the cold-rolled steel sheet 12, the crystal orientation in which the magnetization easy axes are substantially aligned in the conveyance direction X of the cold-rolled steel sheet 12 is achieved, and the glass films are formed on the front surface 12A and the back surface 12B of the cold-rolled steel sheet 12. As a result, the grain-oriented electrical steel sheet 14 is formed. Thereafter, the coil-shaped grain-oriented electrical steel sheet 14 is unwound.

Here, the grain-oriented electrical steel sheet 14 contains, for example, an inhibitor such as MnS or AlN. As a result, in the final finish annealing step, the Goss-oriented crystal grains in which the magnetization easy axes are substantially aligned in the conveyance direction X of the grain-oriented electrical steel sheet 14 are preferentially subjected to crystal-growth. As a result, the grain-oriented electrical steel sheet 14 having a high crystal orientation is formed.

(Insulation Coating Agent Application Step)

Next, in the insulation coating agent application step (step P30), the insulation coating agent (coating liquid) having the electrical insulation property and capable of applying a predetermined tension to the front surface 14A and the back surface 14B of the grain-oriented electrical steel sheet 14 is applied to the front surface 14A and the back surface 14B of the grain-oriented electrical steel sheet 14 by the insulation coating agent application apparatus 70. Usually, the insulation coating agent is applied by the insulation coating agent application apparatus 70 after the remaining unreacted magnesia on the front surface 14A and the back surface 14B of the grain-oriented electrical steel sheet 14 is cleaned and dried.

(Flattening Annealing Step)

Next, in the flattening annealing step (step P32), the grain-oriented electrical steel sheet 14 to which the insulation coating agent is applied is annealed (flattening annealed) at a predetermined temperature (for example, 800°C to 850°C) for a predetermined time (for example, 10 seconds or more and 120 seconds or less) by the flattening annealing apparatus 80 while being conveyed by the conveyance apparatus.

At this time, the tension (sheet passing tension) is applied to the grain-oriented electrical steel sheet 14 from the conveyance apparatus in the conveyance direction X of the grain-oriented electrical steel sheet 14. As a result, the coil set and strain of the grain-oriented electrical steel sheet 14 at the time of the final finish annealing are removed, and the grain-oriented electrical steel sheet 14 is flattened.

In addition, when the grain-oriented electrical steel sheet 14 is annealed in the flattening annealing step, the insulation coating agent is baked on the front surface 14A and the back surface 14B of the grain-oriented electrical steel sheet 14, and the front surface 14A and the back surface 14B of the grain-oriented electrical steel sheet 14 are subjected to insulation coating by the insulation coating agent. Thereafter, the grain-oriented electrical steel sheet 14 is cooled.

(Groove Depth Monitoring System)

Next, a groove depth monitoring system included in the grain-oriented electrical steel sheet manufacturing apparatus according to the present embodiment will be described.

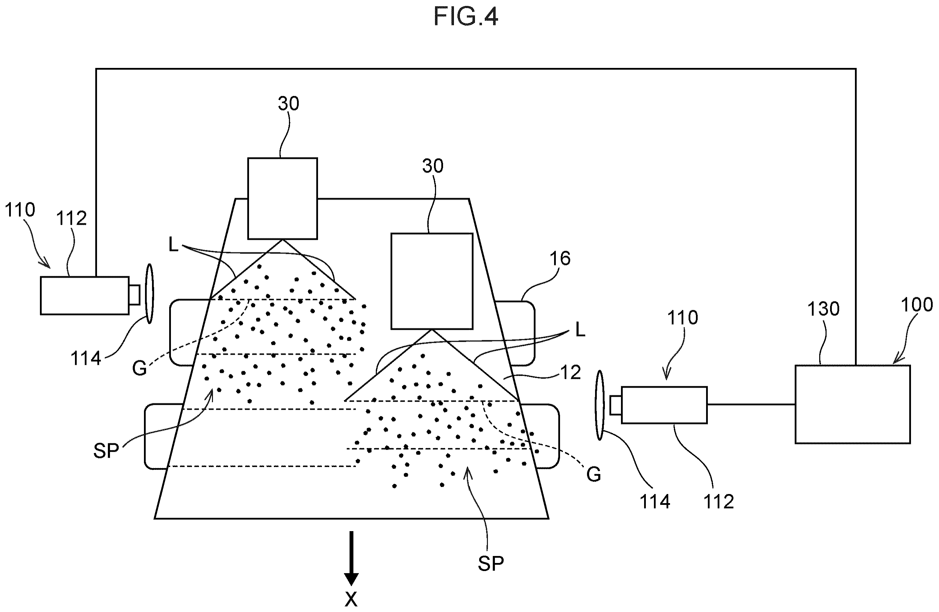

Fig. 4 is a perspective view of a groove depth monitoring system 100 according to the present embodiment when viewed from a front side in the conveyance direction X of the cold-rolled steel sheet 12. The groove depth monitoring system 100 according to the present embodiment is a system that monitors whether or not a depth of a groove G formed on the front surface 12A of the cold-rolled steel sheet 12 is equal to or larger than a reference value. As illustrated in Fig. 4, the groove depth monitoring system 100 includes a control apparatus 130. In the embodiment illustrated in Fig. 4, the groove depth monitoring system 100 includes the control apparatus 130, a spatter amount detection apparatus 110, and a torque detection apparatus 120. The spatter amount detection apparatus 110 and the torque detection apparatus 120 (see Fig. 1) are connected to the control apparatus 130 so as to be able to communicate with each other in a wired or wireless manner.

(Spatter Amount Detection Apparatus)

The spatter amount detection apparatus 110 is an apparatus that detects the amount of spatters generated when the groove G is formed on the front surface 12A of the cold-rolled steel sheet 12 by the beam irradiation apparatus 30. The spatter amount detection apparatus 110 includes an imaging device 112 and a light reducing filter 114.

The imaging device (imaging unit) 112 is, for example, a camera that images spatters SP scattered around the groove G when forming the groove G on the front surface 12A of the cold-rolled steel sheet 12 by the beam irradiation apparatus 30. As an example, when forming the groove G on the front surface 12A of the cold-rolled steel sheet 12 by the beam irradiation apparatus 30, the imaging device 112 images a predetermined region around the groove G from the outside in the width direction of the cold-rolled steel sheet 12 conveyed by a conveyance apparatus 16, and outputs captured image information to the control apparatus 130 described below.

The imaging device 112 may capture a moving image or a still image of the predetermined region around the groove G.

The light reducing filter 114 is a filter that reduces light other than the spatters SP incident on the imaging device 112 when imaging the spatters SP by the imaging device 112. A light reduction rate of the light reducing filter 114 is set to, for example, 75%.

The light reduction rate of the light reducing filter 114 is preferably 10% or higher, and more preferably 50% or higher. The light reduction rate of the light reducing filter 114 is preferably 95% or lower, and more preferably 75% or lower.

(Torque Detection Apparatus)

The torque detection apparatus 120 detects the rotational torque generated in the polishing brush roll 44 when removing the deposits adhering to the front surface 12A of the cold-rolled steel sheet 12 by the polishing brush roll 44. That is, as illustrated in Fig. 1, the torque detection apparatus 120 is an apparatus that detects the rotational torque generated in the polishing brush roll 44 when the deposits such as the spatters SP (see Fig. 4) adhering to the front surface 12A of the cold-rolled steel sheet 12 generated when forming the groove G by the beam irradiation apparatus 30 are removed by the polishing apparatus 40.

The torque detection apparatus 120 is, for example, an ammeter that measures a current value supplied to the motor (not illustrated) that rotationally drives the polishing brush roll 44. The torque detection apparatus 120 outputs the measured current value to the control apparatus 130 described below.

(Outline of Control Apparatus)

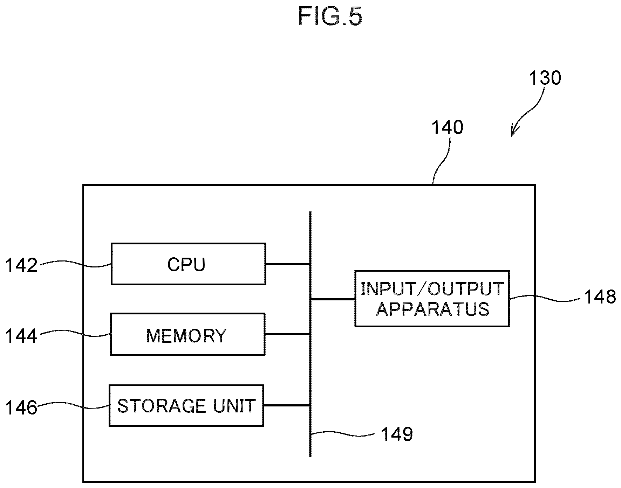

The control apparatus 130 controls an overall operation of the groove depth monitoring system 100. In addition, the control apparatus 130 determines whether or not the depth of the groove G formed on the front surface 12A of the cold-rolled steel sheet 12 is equal to or larger than the reference value. In a case where the depth of the groove G formed on the front surface 12A of the cold-rolled steel sheet 12 is smaller than the reference value, for example, a warning or the like is displayed on a display unit of an input/output apparatus 148 (see Fig. 5) described below.

(Hardware Configuration of Control Apparatus)

First, a hardware configuration of the control apparatus 130 will be described.

The control apparatus 130 is implemented by, for example, a computer 140 illustrated in Fig. 5. The computer 140 includes a central processing unit (CPU) 142, a memory 144 as a temporary storage area, and a non-volatile storage unit 146. The computer 140 includes the input/output apparatus 148. The CPU 142, the memory 144, the storage unit 146, and the input/output apparatus 148 are connected to each other via a bus 149. The CPU 142 is an example of a control unit.

The storage unit 146 is implemented by, for example, a hard disk drive (HDD), a solid state drive (SSD), or a flash memory. A groove depth monitoring program for causing the computer 140 to function as the control apparatus 130 is stored in advance in the storage unit 146 as a recording medium. Furthermore, a storage area for storing various data is provided in the storage unit 146.

The input/output apparatus 148 includes a pointing device such as a mouse, a keyboard, and the display unit, and is used to perform various inputs.

The CPU 142 reads the groove depth monitoring program from the storage unit 146, loads the program into the memory 144, and executes the program. As a result, the computer 140 that has executed the groove depth monitoring program functions as the control apparatus 130.

(Functions of Control apparatus)

Next, functions of the control apparatus 130 will be described.

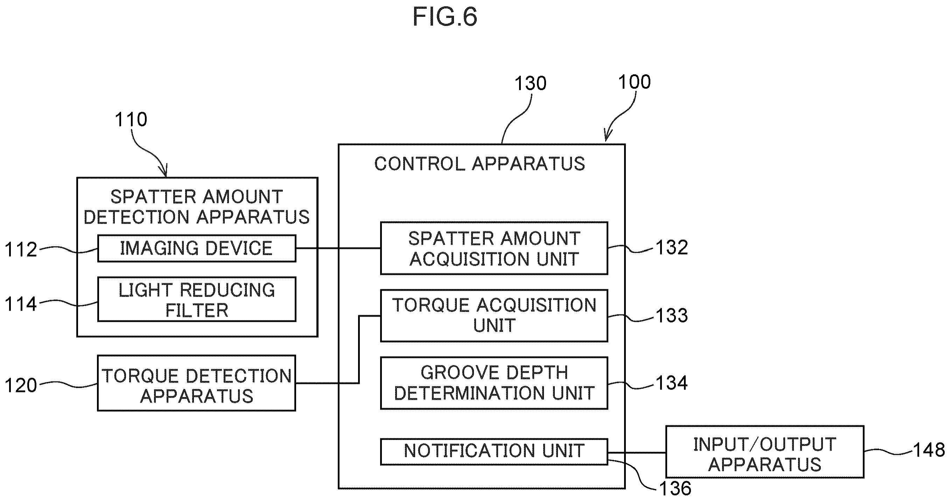

As illustrated in Fig. 6, the control apparatus 130 implements various functions using the above hardware resources when executing the groove depth monitoring program described above. Specifically, the control apparatus 130 functionally includes a spatter amount acquisition unit 132, a torque acquisition unit 133, a groove depth determination unit 134, and a notification unit 136. The spatter amount acquisition unit 132, the groove depth determination unit 134, and the notification unit 136 are implemented by the CPU 142 reading and executing the groove depth monitoring program stored in the storage unit 146.

(Spatter Amount Acquisition Unit)

The spatter amount acquisition unit 132 acquires the amount of spatters detected by the spatter amount detection apparatus 110. Specifically, the spatter amount acquisition unit 132 processes the image information captured by the imaging device 112 of the spatter amount detection apparatus 110, and calculates and acquires the amount of spatters scattered around the groove G when forming the groove G on the front surface 12A of the cold-rolled steel sheet 12 by the beam irradiation apparatus 30.

The amount of spatters is the amount of spatters SP (see Fig. 4) scattered around the groove G when forming the groove G on the front surface 12A of the cold-rolled steel sheet 12 by the beam irradiation apparatus 30.

As an example, the spatter amount acquisition unit 132 classifies each pixel of the image information input from the imaging device 112 into a plurality of ranks (for example, 256 levels (0 to 255)) according to a brightness (luminance value). Then, the spatter amount acquisition unit 132 calculates (counts) the number of pixels ranked at a reference rank or higher in the image information input from the imaging device 112 as the amount of spatters (the number of spatter pixels).

The reference rank is set to 150, for example. The reference rank of the pixel is set based on the light reduction rate of the light reducing filter 114 and an illuminance of an environment in which the spatters SP are imaged if appropriate. Further, the amount of spatters (the number of spatter pixels) can be regarded as an area of a region where the rank of the brightness of the pixel is equal to or higher than the reference rank in a predetermined region (imaging region) around the groove G imaged by the imaging device 112.

(Torque Acquisition Unit)

The torque acquisition unit 133 acquires the rotational torque of the polishing brush roll 44 detected by the torque detection apparatus 120. Specifically, the torque acquisition unit 133 acquires the current value of the motor detected by the torque detection apparatus 120 from the torque detection apparatus 120, and calculates the rotational torque of the polishing brush roll 44 based on the acquired current value.

As an example, the torque acquisition unit 133 calculates the rotational torque based on the following formula.

$$\text{Rotational torque (N·m)} = K_t \times I_a$$

Here,

Kt: a torque constant (N · m/A), and
Ia: the current value (A) of the motor.

The torque constant Kt is set according to specifications (a material, a length, and the like) of the polishing brush 44B, specifications (a type, a supply amount, and the like) of the polishing liquid, specifications (an output and the like) of the motor that rotates the polishing brush roll 44, and the like.

In addition, the torque detection apparatus 120 is not limited to detecting the current value supplied to the motor that rotationally drives the polishing brush roll 44, and may detect the rotational torque of the polishing brush roll 44 by a known method.

In the present embodiment, the torque acquisition unit 133 calculates the rotational torque of the polishing brush roll 44 based on the current value detected by the torque detection apparatus 120. However, the torque detection apparatus 120 may have a function of calculating the rotational torque of the polishing brush roll 44. In this case, the torque acquisition unit 133 acquires the rotational torque of the polishing brush roll 44 from the torque detection apparatus 120.

(Groove Depth Determination Unit)

The groove depth determination unit 134 determines whether or not the depth of the groove G formed on the front surface 12A of the cold-rolled steel sheet 12 is equal to or larger than the reference value based on the amount of spatters acquired by the spatter amount acquisition unit 132, a predetermined reference amount of spatters, the rotational torque of the polishing brush roll 44 acquired by the torque acquisition unit 133, and a predetermined reference rotational torque.

Specifically, the groove depth determination unit 134 determines that the depth of the groove G is equal to or larger than the reference value in a case where the following Formula (1) obtained from a result of a manufacturing test described below is satisfied. On the other hand, the groove depth determination unit 134 determines that the depth of the groove G is smaller than the reference value in a case where the following Formula (1) is not satisfied.

$$1 \geq S/S0 \geq C1 \text{ and } C2 \leq T/T0 \leq C3 \cdots (1)$$

Here,

S: the amount of spatters acquired by the spatter amount acquisition unit,
S0: the reference amount of spatters,
C1: S1/S0,
S1: a minimum amount of spatters generated when forming the groove whose depth is equal to the reference value on the front surface of the cold-rolled steel sheet (steel sheet),
T: the rotational torque acquired by the torque acquisition unit,
T0: the reference rotational torque,
C2: T1/T0,
T1: a minimum rotational torque generated when removing the deposits adhering to the front surface of the cold-rolled steel sheet (steel sheet) on which the groove whose depth is equal to the reference value is formed by the polishing brush roll,
C3: T2/T0, and
T2: a maximum rotational torque generated when removing the deposits adhering to the front surface of the cold-rolled steel sheet (steel sheet) on which the groove whose depth is equal to the reference value is formed by the polishing brush roll.

Formula (1) is described below in the manufacturing test.

(Notification Unit)

In a case where the groove depth determination unit 134 determines that the depth of the groove G is smaller than the reference value, the notification unit 136 displays a message such as a warning on the display unit of the input/output apparatus 148, for example. The notification unit 136 is not limited to displaying a message such as a warning, and may be configured to issue an alert or the like, for example.

(Method of Monitoring Depth of Groove of Grain-Oriented Electrical Steel Sheet)

Next, an example of a method of monitoring the depth of the groove of the grain-oriented electrical steel sheet will be described while describing an operation of the control apparatus 130.

During the passing of the cold-rolled steel sheet 12 described above (during manufacturing of the grain-oriented electrical steel sheet 14), the control apparatus 130 periodically executes, for example, groove depth monitoring processing. The groove depth monitoring processing includes a spatter amount acquisition step, a torque acquisition step, and a groove depth determination step. The groove depth monitoring processing is an example of the method of monitoring the depth of the groove of the electrical steel sheet. The spatter amount acquisition step and the torque acquisition step may be performed during the passing of the cold-rolled steel sheet 12, and the groove depth determination step may be performed during the passing of the cold-rolled steel sheet 12. The groove depth determination step may be performed after the grain-oriented electrical steel sheet 14 is manufactured.

(Spatter Amount Acquisition Step)

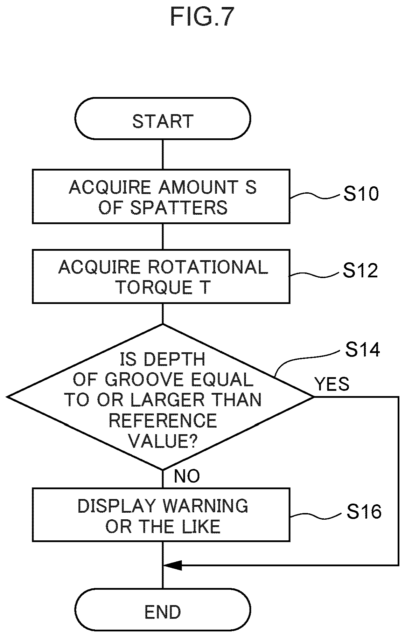

As illustrated in Fig. 7, first, in step S10, the CPU 142 performs the spatter amount acquisition step in parallel with the beam irradiation step described above, and acquires the amount S of spatters generated when forming the groove G on the front surface 12A of the cold-rolled steel sheet 12 by the beam irradiation apparatus 30.

Specifically, the CPU 142 may control the imaging device 112 of the spatter amount detection apparatus 110 when forming the groove G on the front surface 12A of the cold-rolled steel sheet 12 by the beam irradiation apparatus 30. As a result, the spatters SP scattered around the groove G when forming the groove G on the front surface 12A of the cold-rolled steel sheet 12 by the beam irradiation apparatus 30 are imaged by the imaging device 112, and the captured image information is output to the control apparatus 130. The CPU 142 calculates (detects) the amount S of spatters by determining a portion having a high luminance value based on the image information output from the imaging device 112.

(Torque Acquisition Step)

Next, in step S12, the CPU 142 performs the torque acquisition step in parallel with the polishing step described above, and acquires a rotational torque T generated in the polishing brush roll 44 when polishing the deposits adhering to the front surface 12A of the cold-rolled steel sheet 12 by the polishing brush roll 44.

Specifically, the CPU 142 may control the torque detection apparatus 120 when polishing the deposits adhering to the front surface 12A of the cold-rolled steel sheet 12 by the polishing brush roll 44. The torque detection apparatus 120 detects the current value supplied to the motor (not illustrated) that rotates the polishing brush roll 44 when polishing the deposits adhering to the front surface 12A of the cold-rolled steel sheet 12 by the polishing brush roll 44 of the polishing apparatus 40, and outputs the detected current value to the control apparatus 130. The CPU 142 acquires the rotational torque T by calculating the rotational torque T generated in the polishing brush roll 44 based on the current value output from the torque detection apparatus 120.

The spatter amount acquisition step and the torque acquisition step are continuously or periodically performed during the passing of the cold-rolled steel sheet 12 (during the manufacturing of the grain-oriented electrical steel sheet 14).

(Groove Depth Determination Step)

Next, in step S14, the CPU 142 performs the groove depth determination step, and determines whether or not the depth of the groove G formed on the front surface 12A of the cold-rolled steel sheet 12 is equal to or larger than the reference value based on the amount S of spatters acquired in the spatter amount acquisition step, the reference amount S0 of spatters, the rotational torque T of the polishing brush roll 44 acquired in the torque acquisition step, and the reference rotational torque.

Specifically, in a case where Formula (1) above is satisfied, the CPU 142 determines that the depth of the groove G is equal to or larger than the reference value, and ends the processing. On the other hand, in a case where Formula (1) above is not satisfied, the CPU 142 determines that the depth of the groove G is smaller than the reference value, and proceeds to step S16.

In step S16, the CPU 142 displays a warning or the like on the display unit of the input/output apparatus 148, and ends the processing.

(Actions and Effects)

Next, actions and effects of the present embodiment will be described.

The groove depth monitoring system 100 according to the present embodiment acquires the amount S of spatters generated when forming the groove G by irradiating the front surface 12A of the cold-rolled steel sheet 12 with the laser beam L from the beam irradiation apparatus 30. In addition, the groove depth monitoring system 100 acquires the rotational torque generated in the polishing brush roll 44 when removing the deposits adhering to the front surface 12A of the cold-rolled steel sheet 12 on which the groove G is formed by the laser beam L of the beam irradiation apparatus 30 by the polishing brush roll 44.

Then, the groove depth monitoring system 100 determines whether or not the depth of the groove G formed on the front surface 12A of the cold-rolled steel sheet 12 is equal to or larger than the reference value based on the acquired amount S of spatters, the predetermined reference amount S0 of spatters, the acquired rotational torque T of the polishing brush roll 44, and the predetermined reference rotational torque T0. More specifically, the monitoring system 100 determines whether or not the depth of the groove G formed on the front surface 12A of the cold-rolled steel sheet 12 is equal to or larger than the reference value based on Formula (1) above.

As a result, for example, the cold-rolled steel sheet 12 in which the depth of the groove G is smaller than the reference value due to a decrease in output of the laser beam L of the beam irradiation apparatus 30 and a focus shift of the laser beam L with respect to the front surface 12A of the cold-rolled steel sheet 12 can be detected. Therefore, a decrease in depth of the groove G formed on the front surface 14A of the grain-oriented electrical steel sheet 14 can be suppressed.

The groove depth monitoring system 100 also monitors the depth of the groove G formed on the front surface 12A of the cold-rolled steel sheet 12 in real time. Therefore, the cold-rolled steel sheet 12 in which the depth of the groove G is smaller than the reference value can be detected early. Therefore, the amount of manufactured grain-oriented electrical steel sheets 14 in which the depth of the groove G is smaller than the reference value can be reduced.

Here, the amount S of spatters generated when forming the groove G on the front surface 12A of the cold-rolled steel sheet 12 by the beam irradiation apparatus 30 basically decreases as the depth of the groove G formed on the front surface 12A decreases. Therefore, the depth of the groove G formed on the front surface 12A of the cold-rolled steel sheet 12 can be estimated by monitoring the amount S of spatters detected by the spatter amount detection apparatus 110.

However, in a case where a focus shift amount of the laser beam L with respect to the front surface 12A of the cold-rolled steel sheet 12 is small, the amount S of spatters once decreases and then increases again as the focus shift amount of the laser beam L increases. Therefore, in some cases, the focus shift of the laser beam L cannot be detected in a range in which the focus shift amount of the laser beam L with respect to the front surface 12A of the cold-rolled steel sheet 12 is small only by monitoring the amount S of spatters detected by the spatter amount detection apparatus 110.

Here, in a case where the shift amount of the focus of the laser beam L with respect to the front surface 12A of the cold-rolled steel sheet 12 is small, the viscosity of the generated spatters increases due to a temperature change or the like of the front surface 12A of the cold-rolled steel sheet 12, and a particle size of the deposits such as the spatters adhering to the front surface 12A of the cold-rolled steel sheet 12 increases. As a result, the rotational torque T generated in the polishing brush roll 44 when polishing the deposits adhering to the front surface 12A of the cold-rolled steel sheet 12 by the polishing brush roll 44 also increases.

Therefore, in the groove depth monitoring system 100, the rotational torque T of the polishing brush roll 44 detected by the torque detection apparatus 120 is also monitored in addition to the amount S of spatters detected by the spatter amount detection apparatus 110.

Specifically, in a case where Formula (1) above is satisfied, the CPU 142 of the groove depth monitoring system 100 determines that the depth of the groove G formed on the front surface 12A of the cold-rolled steel sheet 12 is equal to or larger than the reference value. As a result, it is possible to detect the focus shift of the laser beam L even in a case where the focus shift amount of the laser beam L with respect to the front surface 12A of the cold-rolled steel sheet 12 is small. Therefore, determination accuracy of the groove depth monitoring system 100 is improved. In addition, it is possible to further suppress a decrease in depth of the groove G formed on the front surface 12A of the cold-rolled steel sheet 12.

(Manufacturing Test)

Next, the manufacturing test will be described.

In the manufacturing test, first, as Test 1, a grain-oriented electrical steel sheet was manufactured by the manufacturing method described above using a focus (focal point) shift amount of a laser beam with respect to a front surface of the grain-oriented electrical steel sheet as a parameter. Then, a depth of a groove and an iron loss reduction rate of the manufactured grain-oriented electrical steel sheet were evaluated.

Next, as Test 2, a grain-oriented electrical steel sheet was manufactured by the manufacturing method described above using laser power (output) of a laser beam with which a front surface of the grain-oriented electrical steel sheet was irradiated from a beam irradiation apparatus as a parameter. Then, a depth of a groove and an iron loss reduction rate of the manufactured grain-oriented electrical steel sheet were evaluated.

(Groove Processing Conditions)

Processing conditions of the groove formed on the front surface of the grain-oriented electrical steel sheet by the beam irradiation apparatus are as follows.

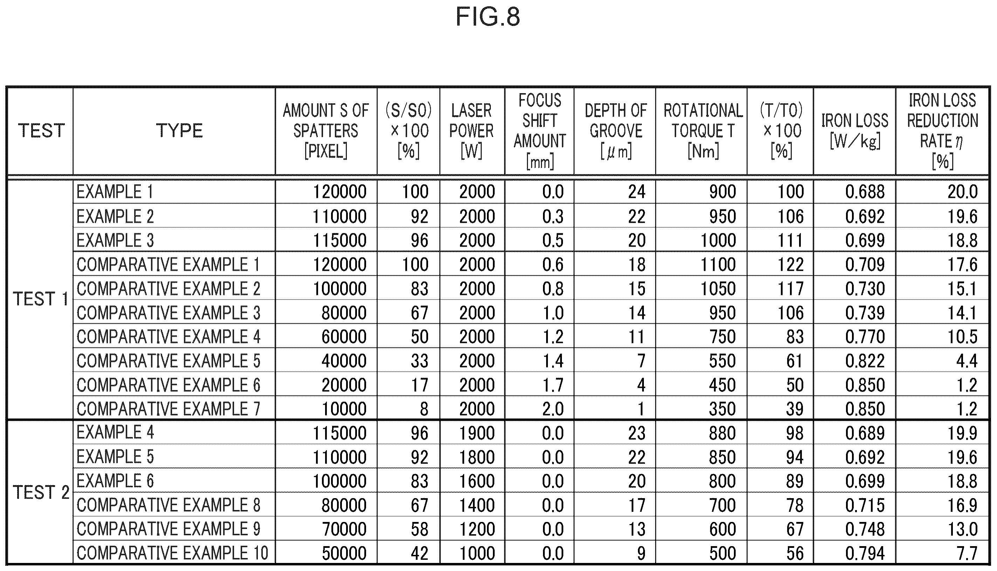

Scanning speed of laser beam: 45 [m/s]
Groove pitch (interval): 3 [mm]
Shape of laser beam: 25 × 50 [μm]
Laser power (Test 1): 2000 [W]
Laser power (Test 2): see Fig. 8

(Polishing Brush Roll)

Material of polishing brush, etc.: Nylon brush with abrasive grains, wire diameter (diameter) of 1.4 [mm], abrasive grain size of #80, bundle type of three-brush bundle

Rotation speed of polishing brush roll: 1200 [rpm]
Rotation direction of polishing brush roll: Direction opposite to conveyance direction of grain-oriented electrical steel sheet
Indentation depth of polishing brush roll: 3 [mm]
Polishing liquid: Water (not containing abrasive grains)
Temperature of polishing liquid: 50°C
One pass per cycle: Backup roll method
Conveyance speed of grain-oriented electrical steel sheet: 60 [m/m]
Torque constant Kt: 9.5 (N·m/A)

(Test Results)

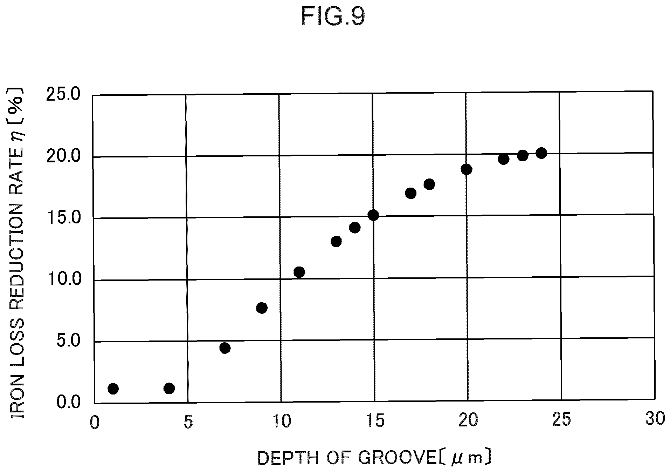

Fig. 8 illustrates test results of Tests 1 and 2. Fig. 9 illustrates a relationship between the depth of the groove formed on the front surface of the grain-oriented electrical steel sheet and the iron loss reduction rate η in each of Tests 1 and 2.
As illustrated in Fig. 8, in each of Tests 1 and 2, the grain-oriented electrical steel sheets having the following reference values or more were regarded as acceptable (examples), and the grain-oriented electrical steel sheets having values smaller than the reference values were regarded as comparative examples.

<Reference Values>

Depth of groove: 20 [μm]
Iron loss reduction rate η: 18 [%]

The reference value of the depth of the groove can be changed if appropriate, and is set in a range of, for example, 20 [μm] to 25 [μm]. Similarly, the reference value of the iron loss reduction rate η can also be changed if appropriate.
The depth of the groove formed on the front surface of the grain-oriented electrical steel sheet was measured by a measurement apparatus (KEYENCE (registered trademark) WI-5000 and WI-001). The depth of the groove can be obtained, for example, by measuring a length corresponding to a difference (H0 - H) using the measurement apparatus, in which H0 (> 0) represents an average height of the front surface of the grain-oriented electrical steel sheet measured in an arbitrary range without the groove, and H (> 0) represents a height of a maximum depth of the groove (a bottom of the groove).
In addition, the iron loss reduction rate η of the grain-oriented electrical steel sheet was obtained from the following formula based on an iron loss of a raw steel sheet.

Iron loss reduction rate η [%] = ((Iron loss of raw steel sheet - Iron loss of grain-oriented electrical steel sheet)/Iron loss of raw steel sheet) × 100

Here, a method of manufacturing a raw steel sheet is different from the manufacturing method according to the above embodiment in that the beam irradiation step and the polishing step are not performed. That is, no groove is formed in the raw steel sheet.
In addition, the iron loss [W/kg] of each of the raw steel sheets and the grain-oriented electrical steel sheets according to Example 1 to 6 and Comparative Example 1 to 10 was an iron loss when a 50-Hz magnetic field having a maximum magnetic flux density of 1.7 Tesla was applied to the following ten test pieces, and was measured with a single sheet tester (SST). The iron loss of the raw steel sheet is 0.86 [W/kg].

<Test Piece>

Dimensions of test piece: 60 × 300 [mm]
Thickness of test piece: 0.23 [mm]

In the manufacturing test, the amount of spatters acquired by the spatter amount acquisition unit 132 under the groove processing conditions in Example 1, that is, in a case where the focus shift amount of the laser beam was 0 [mm] and the laser power of the laser beam was equal to the reference value (2000 [W]), was set as the reference amount S0 of spatters (= 120000 [pixels]). Similarly, the rotational torque of the polishing brush roll 44 acquired by the torque acquisition unit 133 under the groove processing conditions in Example 1 was set as the reference rotational torque T0 (= 900 [Nm]).

Then, for each of Example 1 to 6 and Comparative Example 1 to 10, a ratio (S/S0) of the amount S of spatters to the reference amount S0 of spatters and a ratio (T/T0) of the rotational torque T to the reference rotational torque T0 were obtained.

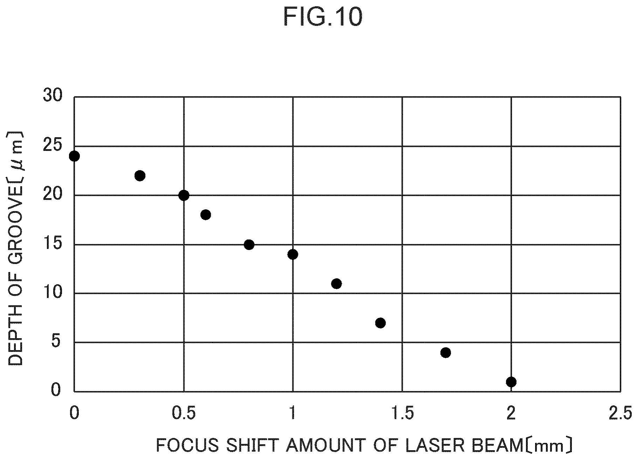

Fig. 10 illustrates a relationship between the focus shift amount of the laser beam and the depth of the groove. As illustrated in Fig. 10, the depth of the groove decreases as the focus shift amount of the laser beam increases.

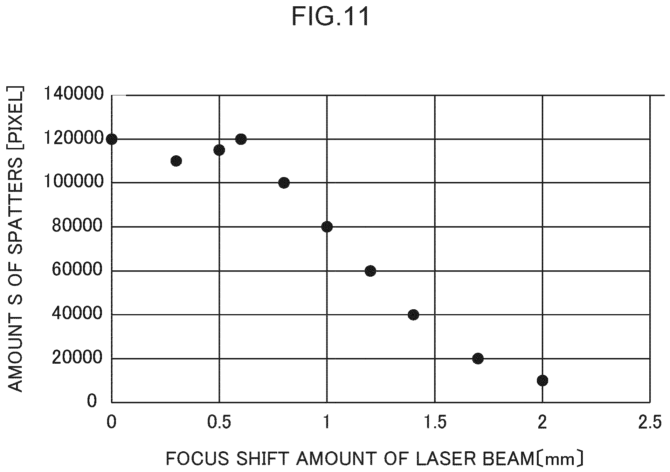

Next, Fig. 11 illustrates a relationship between the focus shift amount of the laser beam and the amount S of spatters. As illustrated in Fig. 11, in a case where the focus shift amount of the laser beam is 0.6 [mm] or more, the amount S of spatters decreases as the focus shift amount of the laser beam increases.

On the other hand, in a case where the focus shift amount of the laser beam is 0.6 [mm] or less, the following occurs. That is, in a case where the focus shift amount of the laser beam is in a range of 0 to 0.3 [mm], the amount S of spatters decreases as the focus shift amount of the laser beam increases. On the other hand, in a case where the focus shift amount of the laser beam is in a range of 0.3 to 0.6 [mm], the amount S of spatters increases as the focus shift amount of the laser beam increases.

It can be seen that it is difficult to detect the shift of the focus of the laser beam in a case where the focus shift amount of the laser beam with respect to the front surface 12A of the cold-rolled steel sheet 12 is small (0.6 [mm] or less) only by monitoring the amount S of spatters detected by the spatter amount detection apparatus 110.

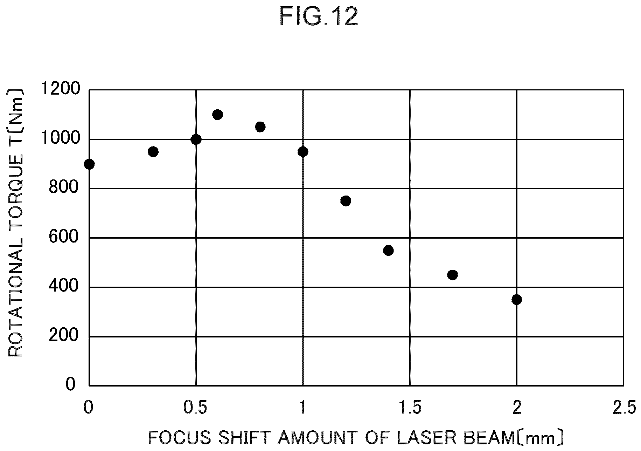

Next, Fig. 12 illustrates a relationship between the focus shift amount of the laser beam and the rotational torque T. As illustrated in Fig. 12 and Fig. 11 described above, the rotational torque T and the amount S of spatters have the same tendency in a range in which the focus shift amount of the laser beam is 0.3 to 0.6 [mm]. That is, in a case where the focus shift amount of the laser beam is in a range of 0.3 to 0.6 [mm], the rotational torque T and the amount S of spatters increase as the focus shift amount of the laser beam increases.

Here, in a case where the focus shift amount of the laser beam is in a range of 0.3 to 0.6 [mm], the viscosity of the generated spatters increases due to the temperature change or the like of the front surface 12A of the cold-rolled steel sheet 12, and the particle size of the deposits such as the spatters adhering to the front surface 12A of the cold-rolled steel sheet 12 increases. Therefore, in a case where the focus shift amount of the laser beam is in a range of 0.3 to 0.6 [mm], it is considered that the rotational torque T generated when polishing the deposits adhering to the front surface 12A of the cold-rolled steel sheet 12 increased.

It can be seen that the shift of the focus can be detected in a case where the shift amount of the focus of the laser beam is in a range of 0.3 to 0.6 [mm] by monitoring the rotational torque T. That is, accuracy in estimating the depth of the groove can be enhanced by monitoring the rotational torque T in addition to the amount S of spatters.

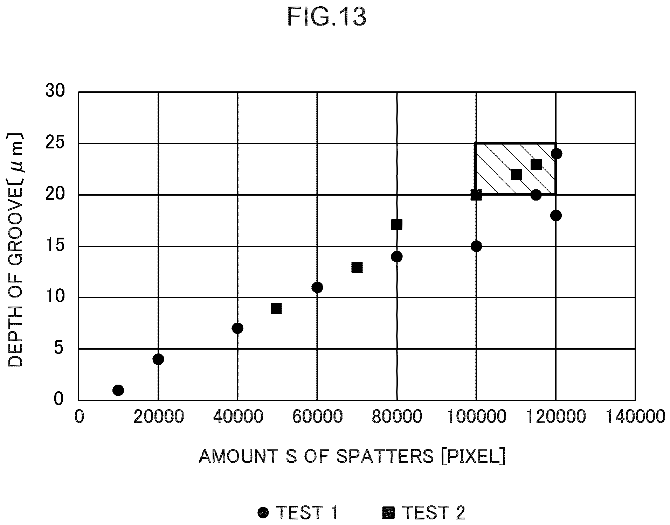

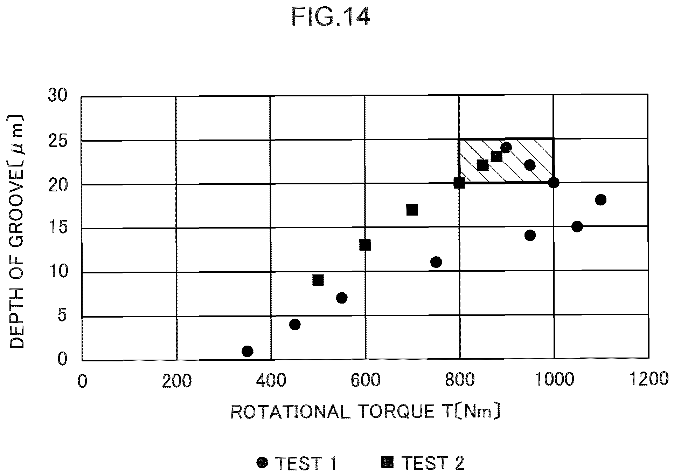

Specifically, Fig. 13 illustrates a relationship between the amount S of spatters and the depth of the groove. As illustrated in Fig. 13, a condition of the amount S of spatters under which the depth of the groove becomes equal to or larger than the reference value of 20 [μm] is 100000 [pixels] or more. Fig. 14 illustrates a relationship between the rotational torque T and the depth of the groove. As illustrated in Fig. 14, a condition of the rotational torque T under which the depth of the groove becomes equal to or larger than the reference value of 20 [μm] is 800 [Nm] to 1000 [Nm]. That is, the conditions of the amount S of spatters and the rotational torque T that can achieve the reference value of 20 [μm] of the depth of the groove are expressed by the following Formula (a).

$$S \geq 100000 \text{ [pixels] and } 800 \text{ [Nm]} \leq T \leq 1000 \text{ [Nm]} \cdots \text{(a)}$$

Here,

S: the amount of spatters acquired by the spatter amount acquisition unit, and

T: the rotational torque acquired by the torque acquisition unit.

Here, when the condition of the amount S of spatters in Formula (a) above is generalized, the amount of spatters becomes equal to or more than the minimum amount of spatters (100000 [pixels]) generated when forming the groove G whose depth is equal to the reference value is formed on the front surface 12A of the cold-rolled steel sheet 12 by the beam irradiation apparatus 30. When the condition of the rotational torque T in Formula (a) above is generalized, the rotational torque T becomes equal to or less than the maximum rotational torque (1000 [Nm]) generated in the polishing brush roll 44 when removing the deposits adhering to the front surface 12A of the cold-rolled steel sheet 12 on which the groove G whose depth is equal to the reference value is formed by the beam irradiation apparatus 30 by the polishing brush roll 44. Therefore, in Formula (a) above, the minimum amount of spatters is the reference amount of spatters, and the maximum rotational torque is the reference rotational torque.

Here, in Formula (a) above, it is possible to determine whether or not the depth of the groove formed on the front surface 12A of the cold-rolled steel sheet 12 is equal to or larger than the reference value in a case where the amount S of spatters acquired by the spatter amount acquisition unit 132 is equal to or more than the reference amount of spatters and the rotational torque T acquired by the torque acquisition unit 133 is equal to or less than the reference rotational torque.

As illustrated in Fig. 8, in a case where the amount S of spatters acquired by the spatter amount acquisition unit 132 is equal to or more than the reference amount of spatters (100000 [pixels]), the rotational torque T acquired by the torque acquisition unit 133 becomes equal to or more than 800 [Nm]. Therefore, a lower limit value (800 [Nm]) of the rotational torque T in Formula (a) above can be omitted.

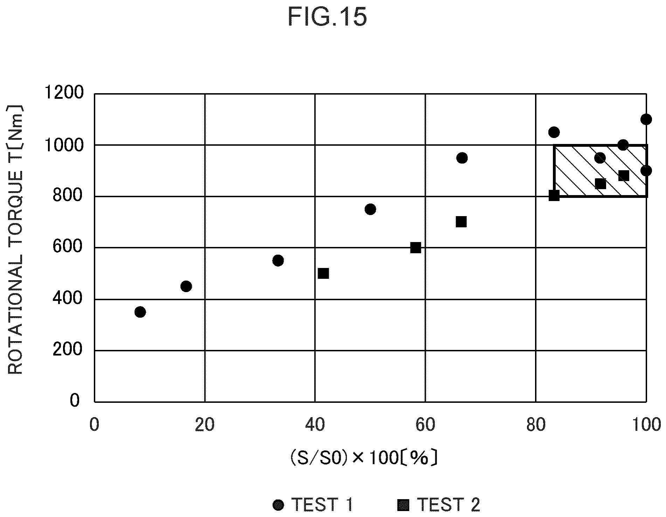

Next, Fig. 15 illustrates a relationship between the ratio (S/S0) of the amount S of spatters to the reference amount S0 of spatters and the rotational torque T. As described above, the reference amount S0 of spatters here is the amount of spatters (= 120000 [pixels]) acquired by the spatter amount acquisition unit 132 under the groove processing conditions in Example 1, that is, in a case where the focus shift amount of the laser beam is 0 [mm] and the laser power of the laser beam is equal to the reference value (2000 [W]).

As illustrated in Fig. 15, a condition under which the depth of the groove becomes equal to or larger than the reference value (20 [$\mu$m]) is expressed by the following Formula (2).

$$1 \geq S/S0 \geq C1 \text{ and } T1 \leq T \leq T2 \cdots (2)$$

Here,

S: the amount of spatters acquired by the spatter amount acquisition unit,
S0: the reference amount of spatters,
C1: S1/S0,
S1: a minimum amount of spatters generated when forming the groove whose depth is equal to the reference value on the front surface of the cold-rolled steel sheet (steel sheet),
T: the rotational torque acquired by the torque acquisition unit,
T1: the reference rotational torque that is the minimum rotational torque generated when removing the deposits adhering to the front surface of the cold-rolled steel sheet (steel sheet) on which the groove whose depth is equal to the reference value is formed by the polishing brush roll, and
T2: the reference rotational torque that is the maximum rotational torque generated when removing the deposits adhering to the front surface of the cold-rolled steel sheet (steel sheet) on which the groove whose depth is equal to the reference value is formed by the polishing brush roll.

In the manufacturing test, C1 is 0.83, T1 is 800 [Nm], and T2 is 1000 [Nm], but C1, T1, and T2 can be changed if appropriate.

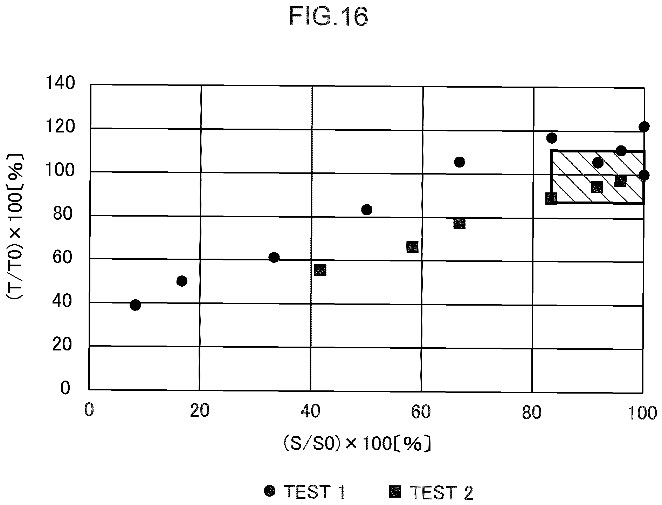

Fig. 16 illustrates a relationship between the ratio (S/S0) of the amount S of spatters to the reference amount S0 of spatters and the ratio (T/T0) of the rotational torque T to the reference rotational torque T0. As described above, the reference rotational torque T0 here is the rotational torque (=900 [Nm]) of the polishing brush roll 44 acquired by the torque acquisition unit 133 under the groove processing conditions in Example 1.

As illustrated in Fig. 16, a condition under which the depth of the groove becomes equal to or larger than the reference value (20 [$\mu$m]) is expressed by Formula (1) above.

$$1 \geq S/S0 \geq C1 \text{ and } C2 \leq T/T0 \leq C3 \cdots (1)$$

Here,

S: the amount of spatters acquired by the spatter amount acquisition unit,

S0: the reference amount of spatters,

C1: S1/S0,

S1: the minimum amount of spatters generated when forming the groove whose depth is equal to the reference value on the front surface of the cold-rolled steel sheet (steel sheet),

T: the rotational torque acquired by the torque acquisition unit,

T0: the reference rotational torque,

C2: T1/T0,

T1: the minimum rotational torque generated when removing the deposits adhering to the front surface of the cold-rolled steel sheet (steel sheet) on which the groove whose depth is equal to the reference value is formed by the polishing brush roll,

C3: T2/T0, and

T2: the maximum rotational torque generated when removing the deposits adhering to the front surface of the cold-rolled steel sheet (steel sheet) on which the groove whose depth is equal to the reference value is formed by the polishing brush roll.

In the manufacturing test, C1 is 0.83, C2 is 0.89, and C3 is 1.11, but C1, C2, and C3 can be changed if appropriate.

By using Formula (a), Formula (1), or Formula (2) in this manner, it is possible to determine whether or not the depth of the groove formed on the front surface 12A of the cold-rolled steel sheet 12 is equal to or larger than the reference value (20 [$\mu$m]).

(Modified Example)

Next, a modified example of the above embodiment will be described.

In Formula (a) above, the reference amount of spatters may be, for example, the amount of spatters obtained by multiplying the minimum amount of spatters by a predetermined safety factor. In Formula (a) above, the reference amount of spatters may be, for example, an average value of a plurality of measured amounts of spatters obtained by measuring the amount of spatters generated when forming the groove G whose depth is equal to or larger than the reference value on the front surface 12A of the cold-rolled steel sheet 12 by the beam irradiation apparatus 30 a plurality of times.

As described above, the reference amount of spatters in Formula (a) can be determined based on the amount of spatters generated when forming the groove G whose depth is equal to or larger than the reference value on the front surface 12A of the cold-rolled steel sheet 12 by the beam irradiation apparatus 30.

In Formula (a) above, the reference rotational torque may be, for example, a rotational torque obtained by multiplying the maximum rotational torque by a predetermined safety factor. In Formula (a) above, the reference rotational torque may be, for example, an average value of a plurality of measured rotational torques obtained by measuring the rotational torque generated in the polishing brush roll 44 when removing the deposits adhering to the front surface 12A of the cold-rolled steel sheet 12 on which the groove G whose depth is equal to or larger than the reference value is formed by the beam irradiation apparatus 30 by the polishing brush roll 44 a plurality of times.

As described above, the reference rotational torque in Formula (a) can be determined based on the rotational torque generated in the polishing brush roll 44 when removing the deposits adhering to the front surface 12A of the cold-rolled steel sheet 12 on which the groove G whose depth is equal to or larger than the reference value is formed by the beam irradiation apparatus 30 by the polishing brush roll 44.

Next, in Formulas (1) and (2) above, the reference amount S0 of spatters may be, for example, the amount of spatters obtained by multiplying, by a predetermined safety factor, the amount of spatters generated when forming the groove G on the front surface 12A of the cold-rolled steel sheet 12 by the laser beam L in a case where the focus shift amount of the laser beam L with which the front surface 12A of the cold-rolled steel sheet 12 is irradiated is 0 and the laser power of the laser beam L is equal to the reference value. Further, the reference amount S0 of spatters may also be, for example, an average value of a plurality of measured amounts of spatters obtained by measuring the amount of spatters generated when forming the groove G on the front surface 12A of the cold-rolled steel sheet 12 by the laser beam L a plurality of times in a case where the focus shift amount of the laser beam L with which the front surface 12A of the cold-rolled steel sheet 12 is irradiated is 0 and the laser power of the laser beam L is equal to the reference value.

As described above, the reference amount S0 of spatters in Formulas (1) and (2) above can be determined based on the amount of spatters generated when forming the groove G on the front surface 12A of the cold-rolled steel sheet 12 by the laser beam L in a case where the focus shift amount of the laser beam L with which the front surface 12A of the cold-rolled steel sheet 12 is irradiated is 0 and the laser power of the laser beam L is equal to the reference value.

In addition, in Formulas (1) and (2) above, for example, the reference rotational torque T0 may be a rotational torque obtained by multiplying, by a predetermined safety factor, the rotational torque generated when removing the deposits adhering to the front surface 12A of the cold-rolled steel sheet 12 on which the groove G is formed by the laser beam L by the polishing brush roll 44 in a case where the focus shift amount of the laser beam L with which the front surface 12A of the cold-rolled steel sheet 12 is irradiated is 0 and the laser power of the laser beam L is equal to the reference value. Further, for example, in Formulas (1) and (2) above, for example, the reference rotational torque T0 may be an average value of a plurality of measured rotational torques obtained by measuring the rotational torque generated when removing deposits adhering to the front surface 12A of the cold-rolled steel sheet 12 on which the groove G is formed by the laser beam L by the polishing brush roll 44 in a case where the focus shift amount of the laser beam L with which the front surface 12A of the cold-rolled steel sheet 12 is irradiated is 0 and the laser power of the laser beam L is equal to the reference value a plurality of times.

As described above, the reference rotational torque T0 in the Formulas (1) and (2) above can be determined based on the rotational torque generated when removing the deposits adhering to the front surface 12A of the cold-rolled steel sheet 12 on which the groove G is formed by the laser beam L by the polishing brush roll 44 in a case where the focus shift amount of the laser beam L with which the front surface 12A of the cold-rolled steel sheet 12 is irradiated is 0, and the laser power of the laser beam L is equal to the reference value.

In the above embodiment, the control apparatus 130 (groove depth determination unit 134) determines whether or not the depth of the groove G formed on the front surface 12A of the cold-rolled steel sheet 12 is equal to or larger than the reference value based on the amount S of spatters detected by the spatter amount detection apparatus 110, the predetermined reference amount S0 of spatters, the rotational torque T of the polishing brush roll 44 detected by the torque detection apparatus 120, and the predetermined reference rotational torque.

However, for example, in a case where there is no focus shift amount of the laser beam L with which the front surface 12A of the cold-rolled steel sheet 12 is irradiated from the beam irradiation apparatus 30, or in a case where the focus shift amount is negligibly small, the control apparatus 130 (groove depth determination unit 134) may perform the following determination. That is, the control apparatus 130 (groove depth determination unit 134) may determine whether or not the depth of the groove G formed on the front surface 12A of the cold-rolled steel sheet 12 is equal to or larger than the reference value based on the rotational torque T of the polishing brush roll 44 detected by the torque detection apparatus 120 and the predetermined reference rotational torque T0.

More specifically, the control apparatus 130 (groove depth determination unit 134) may determine whether or not the depth of the groove G formed on the front surface 12A of the cold-rolled steel sheet 12 is equal to or larger than the reference value in a case where the following Formula (3) is satisfied. The reference rotational torque T0 in the following Formula (3) is determined based on, for example, the rotational torque generated when removing the deposits adhering to the front surface 12A of the cold-rolled steel sheet 12 on which the groove G whose depth is equal to the reference value is formed by the laser beam L by the polishing brush roll 44 in a case where the focus shift amount of the laser beam L with which the front surface 12A of the cold-rolled steel sheet 12 is irradiated is 0.

$$T1 \leq T \leq T0 \cdots (3)$$

Here,

T: the rotational torque acquired by the torque acquisition unit,

T0: the reference rotational torque, and

T1: the minimum rotational torque generated when removing the deposits adhering to the front surface of the steel sheet on which the groove whose depth is equal to the reference value is formed by the polishing brush roll.

In this case, as can be seen from the results of Test 2 illustrated in Fig. 8, it is possible to detect the cold-rolled steel sheet 12 in which the depth of the groove G formed on the front surface 12A of the cold-rolled steel sheet 12 is smaller than the reference value due to a decrease in output of the laser beam of the beam irradiation apparatus 30. Therefore, a decrease in depth of the groove G formed on the front surface 12A of the cold-rolled steel sheet 12 can be suppressed.

In the above manufacturing test, T0 is 900 [Nm] and T1 is =800 [Nm], but T0 and T1 can be changed if appropriate.

A criterion for determining whether or not the depth of the groove formed on the front surface 12A of the cold-rolled steel sheet 12 is equal to or larger than the reference value is not limited to Formulas (a), (1), (2), and (3), and can be changed if appropriate.

In addition, the shape, the size, the rotation speed, the rotation direction, the material, and the like of the polishing brush 44B of the polishing brush roll 44 in the above embodiment can be appropriately changed if necessary.

In the above embodiment, the finish rolling mill 15, the oil film removal apparatus 20, the decarburization annealing apparatus 50, the annealing separator application apparatus 55, the final finish annealing apparatus 60, the insulation coating agent application apparatus 70, and the flattening annealing apparatus 80 are provided in the manufacturing apparatus 10. However, the finish rolling mill 15, the oil film removal apparatus 20, the decarburization annealing apparatus 50, the annealing separator application apparatus 55, the final finish annealing apparatus 60, the insulation coating agent application apparatus 70, and the flattening annealing apparatus 80 may be provided in the manufacturing apparatus 10 if necessary, and can be omitted if appropriate.

In the above embodiment, the groove depth monitoring processing executed by the CPU 142 reading software (program) may be executed by various processors other than the CPU 142. Examples of the processor in this case include a programmable logic apparatus (PLD) in which a circuit configuration can be changed after manufacturing a field-programmable gate array (FPGA) or the like and a dedicated electric circuit that is a processor having a circuit configuration exclusively designed for executing specific processing such as an application specific integrated circuit (ASIC). In addition, the groove depth monitoring processing may be executed by one of the various processors, or may be executed by a combination of two or more processors of the same type or different types (for example, a plurality of FPGAs and a combination of a CPU and an FPGA). More specifically, a hardware structure of the various processors is an electric circuit in which circuit elements such as semiconductor elements are combined.

In the above embodiment, the groove depth monitoring program is stored in the storage unit 146 in advance. However, the groove depth monitoring program may also be provided in a form of being stored in a recording medium (a non-transitory recording medium and a computer-readable recording medium) such as a compact disk read only memory (CD-ROM), a digital versatile disk read only memory (DVD-ROM), or a universal serial bus (USB) memory. In addition, the program may be downloaded from an external apparatus to the control apparatus 130 via a network.

Although one embodiment has been described above, the present disclosure is not limited to such an embodiment, and one embodiment and various modified examples may be combined and used if appropriate, and it is a matter of course that various modes can be implemented without departing from the gist of the disclosure.

The disclosure of Japanese Patent Application No. 2023-036047 filed on March 8, 2023 is incorporated herein by reference in its entirety.

All documents, patent applications, and technical standards mentioned herein are incorporated herein by reference to the same extent as if each individual document, patent application, and technical standard were specifically and individually stated.

The following supplementary notes are further disclosed for the above embodiment.

(Supplementary Note 1)

A grain-oriented electrical steel sheet manufacturing apparatus including:

a laser irradiation apparatus that irradiates a front surface of a cold-rolled steel sheet that is a material of a grain-oriented electrical steel sheet with a laser beam to form a groove;
a polishing brush roll that polishes and removes deposits adhering to the front surface of the cold-rolled steel sheet on which the groove is formed while rotating; and
a groove depth monitoring system that determines a depth of the groove formed on the front surface of the cold-rolled steel sheet,
in which the groove depth monitoring system includes:

a spatter amount detection unit that detects the amount of spatters generated when forming the groove on the front surface of the cold-rolled steel sheet using the laser irradiation apparatus;
a polishing torque detection unit that detects a torque generated in the polishing brush roll when removing the deposits adhering to the front surface of the cold-rolled steel sheet by the polishing brush roll; and
a groove depth determination unit that determines whether or not the depth of the groove formed on the front surface of the cold-rolled steel sheet is equal to or larger than a reference value based on the amount of spatters detected by the spatter amount detection unit, a predetermined reference amount of spatters, the torque of the polishing brush roll detected by the polishing torque detection unit, and a predetermined reference polishing torque.

(Supplementary Note 2)

The grain-oriented electrical steel sheet manufacturing apparatus according to Supplementary Note 1, in which

the reference amount of spatters is a minimum amount of spatters generated when forming the groove whose depth is equal to or larger than the reference value on the front surface of the cold-rolled steel sheet using the laser irradiation apparatus, and
the reference polishing torque is a maximum torque generated in the polishing brush roll when removing the deposits adhering to the front surface of the cold-rolled steel sheet on which the groove whose depth is equal to the reference value is formed using the laser irradiation apparatus by the polishing brush roll.

(Supplementary Note 3)

The grain-oriented electrical steel sheet manufacturing apparatus according to Supplementary Note 2, in which the groove depth determination unit determines that the depth of the groove formed on the front surface of the cold-rolled steel sheet is equal to or more than the reference value in a case where the amount of spatters detected by the spatter amount detection unit is equal to or more than the reference amount of spatters and the torque of the polishing brush roll detected by the polishing torque detection unit is equal to or less than the reference polishing torque.

(Supplementary Note 4)

The grain-oriented electrical steel sheet manufacturing apparatus according to Supplementary Note 2, in which the groove depth determination unit determines that the depth of the groove formed on the front surface of the cold-rolled steel sheet is equal to or larger than the reference value in a case where the reference polishing torque is 1000 [Nm] and Formula (1) is satisfied.

$$S/S0 \geq 0.83 \text{ and } 800 \text{ [Nm]} \leq T \leq 1000 \text{ [Nm]} \cdots (1)$$

Here,

S: the amount of spatters detected by the spatter amount detection unit,
S0: the reference amount of spatters, and
T: the torque of the polishing brush roll detected by the polishing torque detection unit.

(Supplementary Note 5)

The grain-oriented electrical steel sheet manufacturing apparatus according to Supplementary Note 2, in which the groove depth determination unit determines that the depth of the groove formed on the front surface of the cold-rolled steel sheet is equal to or larger than the reference value in a case where Formula (2) is satisfied.

$$S/S0 \geq 0.83 \text{ and } 0.89 \leq T/T0 \leq 1.11 \cdots (2)$$

Here,

S: the amount of spatters detected by the spatter amount detection unit,
S0: the reference amount of spatters,
T: the torque of the polishing brush roll detected by the polishing torque detection unit, and
T0: the reference polishing torque.

(Supplementary Note 6)

A grain-oriented electrical steel sheet manufacturing method using a manufacturing apparatus including

a laser irradiation apparatus that irradiates a front surface of a cold-rolled steel sheet that is a material of a grain-oriented electrical steel sheet with a laser beam to form a groove,
a polishing brush roll that polishes and removes deposits adhering to the front surface of the cold-rolled steel sheet on which the groove is formed while rotating, and
a groove depth monitoring system that determines a depth of the groove formed on the front surface of the cold-rolled steel sheet,
the grain-oriented electrical steel sheet manufacturing method using the groove depth monitoring system including:

a spatter amount detection step of detecting, by a spatter amount detection unit, the amount of spatters generated when forming the groove on the front surface of the cold-rolled steel sheet using the laser irradiation apparatus;
a polishing torque detection step of detecting, by a polishing torque detection unit, a torque generated in the polishing brush roll when removing the deposits adhering to the front surface of the cold-rolled steel sheet by the polishing brush roll; and
a groove depth determination step of determining, by a groove depth determination unit, whether or not the depth of the groove formed on the front surface of the cold-rolled steel sheet is equal to or larger than a reference value based on the amount of spatters detected by the spatter amount detection unit, a predetermined reference amount of spatters, the torque of the polishing brush roll detected by the polishing torque detection unit, and a predetermined reference polishing torque.

**Claims**

1. A groove depth monitoring system comprising:

   a torque acquisition unit that acquires a rotational torque generated when removing deposits adhering to a front surface of a steel sheet on which a groove is formed by a beam, by a polishing brush roll; and
   a groove depth determination unit that determines whether or not a depth of the groove formed on the front surface of the steel sheet is equal to or larger than a reference value based on the rotational torque acquired by the torque acquisition unit and a predetermined reference rotational torque.

2. The groove depth monitoring system according to claim 1, further comprising a spatter amount acquisition unit that acquires an amount of spatters generated when forming the groove by irradiating the front surface of the steel sheet with the beam,
   wherein the groove depth determination unit determines whether or not the depth of the groove formed on the front surface of the steel sheet is equal to or larger than the reference value based on the amount of spatters acquired by the spatter amount acquisition unit, a predetermined reference amount of spatters, the rotational torque acquired by the torque acquisition unit, and the reference rotational torque.

3. The groove depth monitoring system according to claim 2, wherein
   the groove depth determination unit determines that the depth of the groove formed on the front surface of the steel sheet is equal to or larger than the reference value in a case in which the amount of spatters acquired by the spatter amount acquisition unit is equal to or more than the reference amount of spatters and the rotational torque acquired by the torque acquisition unit is equal to or less than the reference rotational torque.

4. The groove depth monitoring system according to claim 2 or 3, wherein:

   the reference amount of spatters is determined based on an amount of spatters generated when forming the groove whose depth is equal to the reference value on the front surface of the steel sheet, and
   the reference rotational torque is determined based on a rotational torque generated when removing the deposits adhering to the front surface of the steel sheet on which the groove whose depth is equal to the reference value is formed, by the polishing brush roll.

5. The groove depth monitoring system according to claim 4, wherein:

   the reference amount of spatters is determined based on an amount of spatters generated when forming the groove on the front surface of the steel sheet by the beam in a case in which a focus shift amount of the beam with which the front surface of the steel sheet is irradiated is 0 and power of the beam is equal to a reference value,
   the reference rotational torque is determined based on a rotational torque generated when removing the deposits adhering to the front surface of the steel sheet on which the groove is formed by the beam, by the polishing brush roll in a case in which the focus shift amount of the beam with which the front surface of the steel sheet is irradiated is 0 and the power of the beam is equal to the reference value, and
   the groove depth determination unit determines that the depth of the groove formed on the front surface of the steel sheet is equal to or larger than the reference value in a case in which Formula (1) is satisfied,

$$1 \geq S/S0 \geq C1 \text{ and } C2 \leq T/T0 \leq C3 \cdots (1)$$

in which
S: the amount of spatters acquired by the spatter amount acquisition unit,
S0: the reference amount of spatters,
C1: S1/S0,
S1: a minimum amount of spatters generated when forming the groove whose depth is equal to the reference value on the front surface of the steel sheet,

T: the rotational torque acquired by the torque acquisition unit,
T0: the reference rotational torque,
C2: T1/T0,
T1: a minimum rotational torque generated when removing the deposits adhering to the front surface of the steel sheet on which the groove whose depth is equal to the reference value is formed, by the polishing brush roll,
C3: T2/T0, and
T2: a maximum rotational torque generated when removing the deposits adhering to the front surface of the steel sheet on which the groove whose depth is equal to the reference value is formed, by the polishing brush roll.

6. The groove depth monitoring system according to claim 5, wherein:

   C1 is 0.83,
   C2 is 0.89, and
   C3 is 1.11.

7. The groove depth monitoring system according to claim 4, wherein:

   the reference amount of spatters is determined based on an amount of spatters generated when forming the groove on the front surface of the steel sheet by the beam in a case in which a focus shift amount of the beam with which the front surface of the steel sheet is irradiated is 0 and power of the beam is equal to a reference value,
   the reference rotational torque is determined based on a rotational torque generated when removing the deposits adhering to the front surface of the steel sheet on which the groove is formed by the beam, by the polishing brush roll in a case in which the focus shift amount of the beam with which the front surface of the steel sheet is irradiated is 0 or the power of the beam is equal to the reference value, and
   the groove depth determination unit determines that the depth of the groove formed on the front surface of the steel sheet is equal to or larger than the reference value in a case in which Formula (2) is satisfied,

$$1 \geq S/S0 \geq C1 \text{ and } T1 \leq T \leq T2 \cdots (2)$$

   in which
   S: the amount of spatters acquired by the spatter amount acquisition unit,
   S0: the reference amount of spatters,
   C1: S1/S0,
   S1: a minimum amount of spatters generated when forming the groove whose depth is equal to the reference value on the front surface of the steel sheet,
   T: the rotational torque acquired by the torque acquisition unit,
   T1: the reference rotational torque that is a minimum rotational torque generated when removing the deposits adhering to the front surface of the steel sheet on which the groove whose depth is equal to the reference value is formed, by the polishing brush roll, and
   T2: the reference rotational torque that is a maximum rotational torque generated when removing the deposits adhering to the front surface of the steel sheet on which the groove whose depth is equal to the reference value is formed, by the polishing brush roll.

8. The groove depth monitoring system according to claim 7, wherein:

   C1 is 0.83,
   T1 is 800 [Nm], and
   T2 is 1000 [Nm].

9. The groove depth monitoring system according to claim 1, wherein
   the reference rotational torque is determined based on a rotational torque generated when removing the deposits adhering to the front surface of the steel sheet on which the groove whose depth is equal to the reference value is formed by the beam, by the polishing brush roll in a case in which a focus shift amount of the beam with which the front surface of the steel sheet is irradiated is 0.

10. The groove depth monitoring system according to claim 9, wherein:

the reference rotational torque is determined based on a rotational torque generated when removing the deposits adhering to the front surface of the steel sheet on which the groove whose depth is equal to the reference value is formed by the beam, by the polishing brush roll in a case in which the focus shift amount of the beam with which the front surface of the steel sheet is irradiated is 0 and power of the beam is equal to a reference value, and the groove depth determination unit determines that the depth of the groove formed on the front surface of the steel sheet is equal to or larger than the reference value in a case in which Formula (3) is satisfied,

$$T1 \leq T \leq T0 \cdots (3)$$

in which
T: the rotational torque acquired by the torque acquisition unit,
T0: the reference rotational torque, and
T1: a minimum rotational torque generated when removing the deposits adhering to the front surface of the steel sheet on which the groove whose depth is equal to the reference value is formed, by the polishing brush roll.

11. The groove depth monitoring system according to claim 10, wherein:

T0 is 900 [Nm], and
T1 is 800 [Nm].

12. An electrical steel sheet manufacturing apparatus comprising:

a beam irradiation apparatus that irradiates a front surface of a steel sheet that is a material of an electrical steel sheet with a beam to form a groove;
a polishing brush roll that removes deposits adhering to the front surface of the steel sheet on which the groove is formed; and
the groove depth monitoring system for an electrical steel sheet according to any one of claims 1 to 11.

13. A groove depth monitoring method comprising:

a torque acquisition step of acquiring a rotational torque generated when removing deposits adhering to a front surface of a steel sheet on which a groove is formed by a beam, by a polishing brush roll; and
a groove depth determination step of determining whether or not a depth of the groove formed on the front surface of the steel sheet is equal to or larger than a reference value based on the rotational torque acquired in the torque acquisition step and a predetermined reference rotational torque.

14. A groove depth monitoring program that is executable by a computer to perform processing including:

a torque acquisition step of acquiring a rotational torque generated when removing deposits adhering to a front surface of a steel sheet on which a groove is formed by a beam, by a polishing brush roll; and
a groove depth determination step of determining whether or not a depth of the groove formed on the front surface of the steel sheet is equal to or larger than a reference value based on the rotational torque acquired in the torque acquisition step and a predetermined reference rotational torque.

EP 4 678 328 A1

# FIG.1

EP 4 678 328 A1

FIG.2

# FIG.3

START

| | |
|---|---|
| CASTING STEP | P10 |
| HOT ROLLING STEP | P12 |
| ANNEALING STEP | P14 |
| COLD ROLLING STEP | P16 |
| OIL FILM REMOVAL STEP | P18 |
| BEAM IRRADIATION STEP | P20 |
| POLISHING STEP | P22 |
| DECARBURIZATION ANNEALING STEP | P24 |
| ANNEALING SEPARATOR APPLICATION STEP | P26 |
| FINAL FINISH ANNEALING STEP | P28 |
| INSULATION COATING AGENT APPLICATION STEP | P30 |
| FLATTENING ANNEALING STEP | P32 |

END

FIG.4

EP 4 678 328 A1

FIG.5

## FIG.6

SPATTER AMOUNT DETECTION APPARATUS 110

IMAGING DEVICE 112

LIGHT REDUCING FILTER 114

TORQUE DETECTION APPARATUS 120

CONTROL APPARATUS 130 / 100

SPATTER AMOUNT ACQUISITION UNIT 132

TORQUE ACQUISITION UNIT 133

GROOVE DEPTH DETERMINATION UNIT 134

NOTIFICATION UNIT 136

INPUT/OUTPUT APPARATUS 148

FIG.7

```
        ┌─────────────┐
        │    START    │
        └─────────────┘
               │
    ┌──────────────────────┐
    │  ACQUIRE AMOUNT S     │────  S10
    │  OF SPATTERS          │
    └──────────────────────┘
               │
    ┌──────────────────────┐
    │  ACQUIRE ROTATIONAL   │────  S12
    │  TORQUE T             │
    └──────────────────────┘
               │
          ◇ IS DEPTH ◇
        ╱ OF GROOVE EQUAL ╲──── S14
       ╱ TO OR LARGER THAN ╲  YES
       ╲   REFERENCE       ╱
        ╲    VALUE?       ╱      │
               │ NO             │
    ┌──────────────────────┐    │
    │  DISPLAY WARNING      │──── S16
    │  OR THE LIKE          │    │
    └──────────────────────┘    │
               │◄───────────────┘
        ┌─────────────┐
        │     END     │
        └─────────────┘
```

# FIG.8

| TEST | TYPE | AMOUNT S OF SPATTERS [PIXEL] | (S/SO) ×100 [%] | LASER POWER [W] | FOCUS SHIFT AMOUNT [mm] | DEPTH OF GROOVE [μm] | ROTATIONAL TORQUE T [Nm] | (T/TO) ×100 [%] | IRON LOSS [W/kg] | IRON LOSS REDUCTION RATE η [%] |
|---|---|---|---|---|---|---|---|---|---|---|
| TEST 1 | EXAMPLE 1 | 120000 | 100 | 2000 | 0.0 | 24 | 900 | 100 | 0.688 | 20.0 |
| | EXAMPLE 2 | 110000 | 92 | 2000 | 0.3 | 22 | 950 | 106 | 0.692 | 19.6 |
| | EXAMPLE 3 | 115000 | 96 | 2000 | 0.5 | 20 | 1000 | 111 | 0.699 | 18.8 |
| | COMPARATIVE EXAMPLE 1 | 120000 | 100 | 2000 | 0.6 | 18 | 1100 | 122 | 0.709 | 17.6 |
| | COMPARATIVE EXAMPLE 2 | 100000 | 83 | 2000 | 0.8 | 15 | 1050 | 117 | 0.730 | 15.1 |
| | COMPARATIVE EXAMPLE 3 | 80000 | 67 | 2000 | 1.0 | 14 | 950 | 106 | 0.739 | 14.1 |
| | COMPARATIVE EXAMPLE 4 | 60000 | 50 | 2000 | 1.2 | 11 | 750 | 83 | 0.770 | 10.5 |
| | COMPARATIVE EXAMPLE 5 | 40000 | 33 | 2000 | 1.4 | 7 | 550 | 61 | 0.822 | 4.4 |
| | COMPARATIVE EXAMPLE 6 | 20000 | 17 | 2000 | 1.7 | 4 | 450 | 50 | 0.850 | 1.2 |
| | COMPARATIVE EXAMPLE 7 | 10000 | 8 | 2000 | 2.0 | 1 | 350 | 39 | 0.850 | 1.2 |
| TEST 2 | EXAMPLE 4 | 115000 | 96 | 1900 | 0.0 | 23 | 880 | 98 | 0.689 | 19.9 |
| | EXAMPLE 5 | 110000 | 92 | 1800 | 0.0 | 22 | 850 | 94 | 0.692 | 19.6 |
| | EXAMPLE 6 | 100000 | 83 | 1600 | 0.0 | 20 | 800 | 89 | 0.699 | 18.8 |
| | COMPARATIVE EXAMPLE 8 | 80000 | 67 | 1400 | 0.0 | 17 | 700 | 78 | 0.715 | 16.9 |
| | COMPARATIVE EXAMPLE 9 | 70000 | 58 | 1200 | 0.0 | 13 | 600 | 67 | 0.748 | 13.0 |
| | COMPARATIVE EXAMPLE 10 | 50000 | 42 | 1000 | 0.0 | 9 | 500 | 56 | 0.794 | 7.7 |

FIG.9

FIG.10

# FIG.11

FIG.12

FIG.13

FIG.14

● TEST 1 ■ TEST 2

FIG.15

## FIG.16

# INTERNATIONAL SEARCH REPORT

| International application No. |
|---|
| **PCT/JP2024/007872** |

**A. CLASSIFICATION OF SUBJECT MATTER**

*B23K 26/00*(2014.01)i; *B23K 26/364*(2014.01)i; *C21D 8/12*(2006.01)i; *C21D 9/46*(2006.01)i; *C22C 38/00*(2006.01)i; *C22C 38/06*(2006.01)i; *H01F 1/147*(2006.01)i; *H01F 41/02*(2006.01)i
FI: B23K26/00 M; H01F41/02 A; H01F1/147 175; C22C38/00 303U; C22C38/06; C21D9/46 501B; C21D8/12 D; B23K26/364

According to International Patent Classification (IPC) or to both national classification and IPC

**B. FIELDS SEARCHED**

Minimum documentation searched (classification system followed by classification symbols)
B23K26/00-26/70; C21D8/12; C21D9/46; C22C38/00; C22C38/06; H01F1/147; H01F41/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-122264 A (NIPPON STEEL & SUMITOMO METAL CORPORATION) 13 July 2017 (2017-07-13) entire text, all drawings | 1-14 |
| A | JP 7-331332 A (KAWASAKI STEEL CORP.) 19 December 1995 (1995-12-19) entire text, all drawings | 1-14 |
| A | WO 2016/171129 A1 (NIPPON STEEL & SUMITOMO METAL CORPORATION) 27 October 2016 (2016-10-27) entire text, all drawings | 1-14 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/007872**

| Patent document cited in search report | | | Publication date (day/month/year) | Patent family member(s) | | | Publication date (day/month/year) |
|---|---|---|---|---|---|---|---|
| JP | 2017-122264 | A | 13 July 2017 | (Family: none) | | | |
| JP | 7-331332 | A | 19 December 1995 | (Family: none) | | | |
| WO | 2016/171129 | A1 | 27 October 2016 | US | 2018/0036838 | A1 | |
| | | | | entire text, all drawings | | | |
| | | | | EP | 3287532 | A1 | |
| | | | | KR | 10-2017-0122819 | A | |
| | | | | CN | 107406903 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017122264 A
- JP 2019512047 A

- JP 2023036047 A